Europäisches Patentamt

(19) European Patent Office

Office européen des brevets

(11) **EP 0 745 841 B1**

(12) **EUROPEAN PATENT SPECIFICATION**

(45) Date of publication and mention
of the grant of the patent:
**03.04.2002 Bulletin 2002/14**

(21) Application number: **95940470.8**

(22) Date of filing: **18.12.1995**

(51) Int Cl.⁷: **G01N 22/02**

(86) International application number:
**PCT/JP95/02604**

(87) International publication number:
**WO 96/18884 (20.06.1996 Gazette 1996/28)**

(54) **A METHOD AND APPARATUS FOR INSPECTING A PIPE USING ELECTROMAGNETIC RADIATION**

VERFAHREN UND VORRICHTUNG ZUR INSPEKTION EINES ROHRES MIT ELEKTROMAGNETISCHER STRAHLUNG

METHODE ET APPAREIL POUR INSPECTION D'UN TUBE UTILISANT DES RAYONS ELECTROMAGNETIQUES

(84) Designated Contracting States:
**DE FR GB**

(30) Priority: **16.12.1994 JP 31349894**
**16.12.1994 JP 31349994**
**14.07.1995 JP 17918395**
**14.07.1995 JP 17918495**
**14.07.1995 JP 17918595**
**28.07.1995 JP 19273595**
**21.08.1995 JP 21146495**
**21.08.1995 JP 21146595**

(43) Date of publication of application:
**04.12.1996 Bulletin 1996/49**

(73) Proprietor: **TOKYO GAS CO., LTD.**
**Minato-ku, Tokyo 105-0022 (JP)**

(72) Inventors:
• **SUYAMA, Kiichi**
**Yokohama-shi Kanagawa 235 (JP)**
• **IMAOKA, Takashi**
**Pare.doll Isesakicho Minami 704**
**Yokohama-shi Kanagawa 232 (JP)**

(74) Representative: **Bryer, Kenneth Robert**
**K.R. Bryer & Co.**
**7 Gay Street**
**Bath BA1 2PH (GB)**

(56) References cited:
JP-A- 2 052 279      JP-A- 2 187 684
JP-A- 3 028 709      JP-A- 4 036 688
JP-A- 5 180 804      JP-A- 5 312 938
JP-A- 53 008 190    JP-A- 55 007 661
JP-A- 60 076 802    JP-A- 60 138 453
JP-A- 60 242 347    JP-A- 61 066 979
JP-A- 61 274 209    JP-A- 63 179 274
JP-B- 5 055 833      JP-B- 29 002 036
JP-B- 53 012 070    JP-B- 56 005 951

• PATENT ABSTRACTS OF JAPAN vol. 013, no.
508 (P-960), 15 November 1989 & JP 01 206246
A (OSAKA GAS CO LTD; OTHERS: 02), 18 August
1989,
• PATENT ABSTRACTS OF JAPAN vol. 016, no.
562 (P-1456), 3 December 1992 & JP 04 215046 A
(NIPPON STEEL CORP), 5 August 1992,
• Microfilm of the Specification and Drawings
Annexed to the Written Application of Japanese
Utility Model Application No. 142160/1985,
(Laid-Open No. & JP-U-62 049 301) (NEC Corp.),
26 March 1987.
• Microfilm of the Specification and Drawings
Annexed to the Written Application of Japanese
Utility Model Application No. 39748/1990,
(Laid-Open No. & JP-U-3 130 607) (Fujitsu
General Ltd.), 27 December 1991.
• Microfilm of the Specification and Drawings
Annexed to the Written Application of Japanese
Utility Model Application No. 130384/1986,
(Laid-Open No. & JP-U-63 035 977) (Tokyo Gas
Co. Ltd., Nec Corp.), 8 March 1988.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for inspecting piping systems used to supply city gas and the like, which are mainly buried under roads or installed in the walls, and/or floors of buildings and hence not exposed outside, by the use of electromagnetic waves to detect damaged portions such as holes formed by corrosion in the pipes and/or the location of joints in the piping system.

The gas leak from a hole formed by corrosion in an unexposed gas pipe or buried pipe in the piping system of a city gas supply network is conventionally inspected by various methods using, for example, the sense of smell or a gas detector, or by boring work in combination with the foregoing means etc. If a gas leak is detected in reference to the smell or during a periodical inspection, the ground is dug or the wall is removed, in order to exchange or repair the gas pipe.

However, in the conventional methods, it is the gas itself or an odorous component added beforehand that is detected, so that diffusion from the damaged portion of the gas pipe makes it difficult to detect the occurrence and location of a gas leak.

For example, if a cavity is formed parallel to a pipe installed underground or inside a wall, it can happen that the gas leaking from a damaged portion of the pipe migrates through the cavity and diffuses into the air or indoors at a position set apart from the actual damaged portion. If, then, excavation or removal of the wall is effected based on the wrong information, the work is wasteful, and second and even third excavations etc may be disadvantageously required. Further, if gas leaking from a damaged portion of a pipe is retained near the damaged portion without diffusing into air or indoors, the leak itself may not be detectable.

Thus, a method of inspecting the occurrence of a damaged portion of a piping system based on detection of the gas itself or odorous component added beforehand cannot always accurately detect the occurrence of leak and its location.

A conventional, general inspection method for detecting damage to metallic structures uses ultrasound flaw detection, but it is difficult to apply this method to the inspection of unexposed pipes since a probe must always be kept in touch with the object to be inspected, and flaw detection cannot be made over a long distance.

JP 5 180 804 discloses a method and apparatus for detecting leaks from a pipe in which a transmitter and receiver are both located in the pipe and a change in the phase of the electromagnetic radiation is monitored as the arrangement is moved along the pipe.

JP 01 206 246 makes a similar disclosure.

JP 4 036 688 discloses a method and apparatus that locates only the position of a pipe by monitoring the intensity of received electromagnetic radiation outside the pipe.

JP 6 335 997 discloses a method and apparatus which uses an electric current applied to a metal pipe and monitors the resultant magnetic field so as to determine the position of the pipe.

The present invention seeks to overcome the above mentioned disadvantages of the conventional inspection methods, and to provide an inspection method which can relatively accurately detect damaged portions of pipes such as holes formed by corrosion, when applied to the inspection of elements of piping systems, particularly unexposed metallic piping systems.

The present invention further seeks to provide an inspection method which can measure the distances in piping systems to damaged portions and can, in addition, detect the locations and states of some joints as well as other elements of the piping system.

The present invention therefore provides a method for inspecting a pipe using electromagnetic radiation comprising the steps of transmitting electromagnetic waves from the antenna of a transmitter receiving electromagnetic waves with the antenna of a receiver whereby to determine the position along the pipe of an electromagnetic leakage point such as a joint or fault in the pipe characterised in that it comprises the further steps of locating the transmitting antenna inside or outside the pipe and locating the receiving antenna respectively outside or inside the pipe effecting movement of at least one of the receiving and transmitting antenna with respect to the pipe, detecting in the received electromagnetic radiation a peak the presence of which is not due to variation in separation of the transmitting and receiving antenna and identifying the position of the electromagnetic leakage point by reference to the position of the moving antenna or antennae when such a peak is detected.

In a preferred embodiment of the present invention the electromagnetic waves are transmitted at a frequency such that they are propagated within the pipe.

In one embodiment the transmitter antenna may be located at a fixed location and the receiving antenna is moved with respect to it and the pipe to detect said peak in the received electromagnetic radiation. Alternatively the receiver antenna may be located at a fixed location and the transmitting antenna is moved with respect to it and the pipe to detect said peak in the received electromagnetic radiation.

In this embodiment the electromagnetic waves propagated in a pipe do not usually leak outside, but if there is any damaged portion such as a hole formed by corrosion or crack etc in the pipe, the electromagnetic waves leak from the portion, and are detected by the receiving antenna, to allow the damaged portion to be identified. The leak of electromagnetic waves may occur not only at such damaged portions but also at joints, and in this arrangement, joints may also be detected. If the receiving antenna is non-directional or moved parallel to the direction of the pipe the level of leaking electromagnetic waves received by the receiver becomes highest when the receiving antenna is at a location nearest to the damaged portion or joint. The location of an unexposed, damaged portion or joint in a piping system buried under a road or installed in a wall or under a floor is accurately detected by the location of the receiving antennae when the level of the received waves becomes a peak.

The present invention further provides for apparatus for inspecting a pipe using electromagnetic radiation, comprising a transmitter for transmitting electromagnetic waves from a transmitting antenna, a receiver for receiving electromagnetic waves at a receiving antenna whereby to determine the position along the pipe of an electromagnetic wave leakage point in the pipe, characterised in that the transmitting antenna is located inside or outside the pipe and the receiving antenna is located respectively outside or inside the pipe and means are provided for effecting movement of the transmitting antenna and/or the receiving antenna with respect to the pipe and means for detecting a peak the presence of which is not due to variation in separation of the transmitting and receiving antenna so that the position of the electromagnetic leakage point is identified by reference to the position of the moving antenna or antennae when such a peak is detected.

In one embodiment the wall of the pipe to be inspected is drilled to have a hole, and internal threads are formed so as to make an antenna installation hole; a coaxially formed antenna with a probe protruding at the centre and an outside member having external threads is installed in the hole with the internal and external threads engaged with each other, so as to locate the probe in the pipe.

The transmitting antenna can be easily installed in the pipe to be inspected: If a tee is installed at an extension of the pipe, drilling and cutting is not necessary so that if the piping system to be inspected is, for example, a city gas supply system, the installation of the transmitting antenna and subsequent inspection can therefore be effected without stopping the supply of gas. However, when the transmitting antenna is to be installed in a hole drilled in the wall of a pipe, it can also be done so without stopping the supply of gas. These means for installing the transmitting antenna can also be applied to the methods described later for installing the receiving antenna at a proper place of a pipe of a piping system.

In one embodiment of the present invention, the frequency of electromagnetic waves is continuously or stepwise changed over time. Since this does not allow any fixed electromagnetic field distribution to be formed in the pipe, the leak of electromagnetic waves from the location to be detected can be reliably identified, so enabling reliable detection of the location of an electromagnetic leakage point.

In another embodiment of the present invention the signal received by the receiver when the transmitter is turned on is compared with a signal received by the receiver when the transmitter is turned off whereby to facilitate in distinguishing the reception of electromagnetic waves caused by leakage at an electromagnetic wave leakage point in the pipe from the reception of electromagnetic waves from other sources.

The receiving antenna outside the piping system can therefore reliably identify whether any electromagnetic waves received are leaking from said location or are external noise only.

In still another embodiment of the present invention the electromagnetic waves transmitted by the transmitter are modulated.

The modulation of electromagnetic waves can be used as a method for changing the frequency of electromagnetic waves over time and also as a method for turning on and off the transmission of electromagnetic waves by the transmitter.

In one embodiment the frequency of the electromagnetic waves transmitted by the transmitter is changed by sweep.

In these embodiments the electromagnetic waves may be modulated by human recognisable information signals. Such signals may be audio signals or visual signals. Whether the electromagnetic waves received by the receiver are the electromagnetic waves transmitted by the transmitter or noise can then be easily discriminated.

In another aspect of the present invention, the transmitting antenna of the transmitter can be moved along a pipe outside the piping system to be inspected, to transmit electromagnetic waves from the outside of the piping system. In this case, the receiving antenna of the receiver is fixed at a proper place of the pipe, or is moved in relation with the movement of the transmitting antenna, to receive the electromagnetic waves introduced into the piping system from outside, for inspecting the elements of the piping system. In this case turn on and off in the transmission of electromagnetic waves by the transmitter and modulation of the electromagnetic waves by changes in frequency over time may also be used as described before.

Now electromagnetic waves transmitted from outside are introduced into the piping system from the location to be detected, propagated in the pipe and received by the receiver through the receiving antenna, to allow the location to be identified. Since the level of the electromagnetic waves introduced from the location to be detected and received by the receiver becomes highest when the transmitting antenna is at a location nearest to the location to be detected, the location to be detected of the piping system can be accurately detected in reference to the location of the transmitting antenna at which the level of received electromagnetic waves becomes a peak.

In one embodiment of the present invention, the electromagnetic waves received by the receiver are compared with the electromagnetic waves transmitted by the transmitter as modulated signals, to obtain the time difference; and the time difference is used to determine the propagation time of the electromagnetic waves from the point of transmission in the pipe to the leakage point whereby to determine the propagation distance in the pipe.

Thus the location of a damaged portion or a joint of a pipe in a piping system can be detected, and in addition, the distance from a reference location properly set in the piping system to a leak point can be measured.

A further aspect of the present invention provides that the frequency of the transmitted electromagnetic waves is lower than the cut-off frequency above which the pipe acts as a waveguide, and both the transmitter antenna and the receiver antenna are moved with respect to the pipe, one inside and one outside the pipe, to detect peaks in the received electromagnetic radiation, the position of both the transmitting antenna and the receiving antenna being used to determine the location of an electromagnetic wave leakage point when the said peak is detected.

In one embodiment the transmitting antenna of the transmitter is moved in the pipe to be inspected of a piping system, electromagnetic waves are transmitted at a frequency lower than the cut-off frequency for the pipe to act as a wave guide, and the receiving antenna of the receiver is moved in relation with the movement of the transmitting antenna, to receive leaking electromagnetic waves for inspection of elements of the piping system. In this embodiment the location of an element of the piping system to be inspected is detected in reference to the location of the transmitting antenna at which the level of the electromagnetic waves received by the receiver becomes a peak.

Since the electromagnetic waves from the transmitting antenna are attenuated greatly without being propagated in the pipe, the quantity of the electromagnetic waves leaking from the location to be detected such as a damaged portion or joint of the pipe becomes largest when the transmitting antenna is nearest to the location to be detected. Therefore, the level of electromagnetic waves received by the receiver is very large when the transmitting antenna is near the location to be detected, making the peak more outstanding, and so enhancing the detection accuracy of the location concerned by the peak.

In an alternative embodiment the transmitting antenna of the transmitter is moved along a pipe outside the piping system to be inspected, electromagnetic waves are transmitted from outside the piping system at a frequency lower than the cut-off frequency for the pipe used as a wave-guiding channel of the electromagnetic waves, and the receiving antenna of the receiver is moved in the pipe in relation with the movement of the transmitting antenna, to receive the electromagnetic waves introduced into the pipe from outside, for inspection of elements of the piping system. In this embodiment the location to be detected of an element of the piping system to be inspected is detected in reference to the location of the receiving antenna at which the level of electromagnetic waves received by the receiver becomes a peak.

Since the electromagnetic waves introduced from the transmitting antenna through the location to be detected are not propagated in the pipe, the quantity of leak is largest when the receiving antenna is nearest to the location to be detected. Therefore, also in this case, the level of electromagnetic waves received by the receiving antenna becomes largest near the location to be detected, making the peak more outstanding, and so enhancing the detection accuracy of the location to be detected by the peak.

In this aspect of the present invention the electromagnetic waves may also be modulated by proper information signals and whether the electromagnetic waves received are the electromagnetic waves transmitted by the transmitter or noise can be easily discriminated.

In this aspect of the present invention the frequency of the electromagnetic waves transmitted by the transmitting antenna can be lower than the cut-off frequency determined by the diameter of the pipe of the piping system, so as to decrease the influence of the attenuation of the electromagnetic waves by the soil or concrete, etc for inspecting the buried piping system.

Further, the necessity for the synchronous movements of the transmitting antenna and the receiving antenna may be removed by providing a long transmitting or receiving antenna for introduction into the pipe of the piping system to be inspected.

The present invention is described below in more detail with reference to the following drawings in which

Fig. 1 is a schematic illustration showing one embodiment of the present invention.
Fig. 2 is a schematic illustration showing another embodiment of the present invention.
Fig. 3 and 4 are graphs showing the results of tests applying the present invention to detect a drilled hole in a test pipe.
Fig. 5 is a sectional view showing an antenna attached to a pipe.
Fig. 6 shows an essential portion of Fig. 5.
Fig. 7 is a schematic illustration showing a method for installing an antenna in a piping system.
Fig. 8 is a sectional view showing an arrangement of an antenna in which the installation method of Fig. 7 is applied.

Fig. 9 through 12 are sectional views showing other arrangements of an antenna in which the installation method of Fig. 7 is applied.

Fig. 13 is a schematic illustration showing a tester for inspecting the leak of electromagnetic waves through a joint.

Fig. 14 is a graph showing the results of a test in Fig. 13.

Fig. 15 is a schematic illustration showing the action of distance measurement in a piping system.

Fig. 16 to 18 show waveforms of electromagnetic waves transmitted from a transmitting antenna.

Fig. 19 is a schematic illustration showing a pipe inspection action with the transmission of electromagnetic waves turned on and off.

Fig. 20 is a schematic illustration showing another pipe inspection action with the transmission of electromagnetic waves turned on and off.

Fig. 21 is a schematic illustration showing the results of inspection actions of Figs. 19 and 20.

Fig. 22 is a schematic illustration showing an inspection action with an antenna moved.

Fig. 23 is a perspective view showing some components.

Fig. 24 is a schematic illustration showing an inspection action by a long antenna.

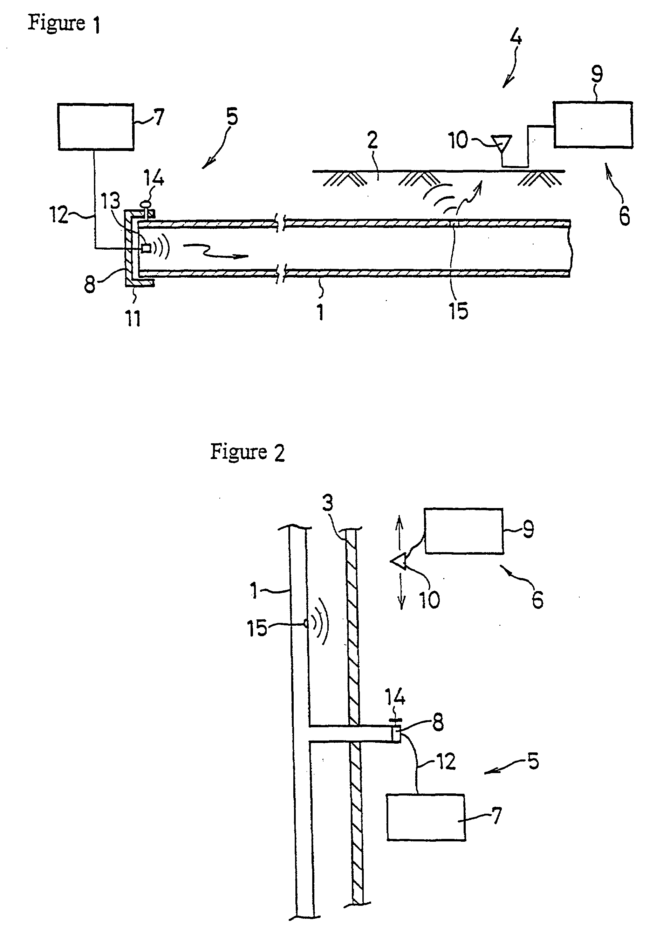

Figure 1 conceptually shows one embodiment of the present invention in which the element to be inspected is a pipe, generally designated 1, of a piping system, which is buried under the ground 2. Figure 2 conceptually shows another embodiment, in which, the pipe 1 is installed inside a wall 3 of a building.

The piping systems which can be inspected according to present invention include city gas supply systems, as mentioned above, as well as piping systems in chemical plants, piping systems for heat exchanges in electric power plants, water supply pipes, etc. The present invention can be effectively applied to piping systems which are buried underground, for example, under roads or to piping systems which are installed within walls or under floors of buildings and hence not exposed.

The inspection apparatus 4 generally comprises a transmitter 5 and a receiver 6, with the transmitter 5 comprising a transmitter proper 7 and a transmitting antenna 8 which is installed at an end of the pipe 1, so as to propagate electromagnetic waves into the pipe 1. The receiver 6 comprises a receiver proper 9 and a receiving antenna 10, which can move.

The transmitting antenna 8 has an antenna proper 13 which protrudes through the centre of a metallic cover 11 closing one end of the pipe 1 and is connected with the transmitter proper 7 through a coaxial cable 12. The transmitting antenna 8 is fixed at the end of the pipe 1 by a screw 14 provided at a suitable position on the cylindrical portion of cover 11, so that the antenna proper 13 is almost at the centre of the pipe 1. The antenna proper 13 is a probe or loop, etc. which excites electromagnetic waves, so that they are propagated according to a predetermined mode. Other preferred embodiments of the transmitting antenna 8 (or receiving antenna) will be described in detail later.

The receiving antenna 10 can be moved manually or on a carriage, etc., either separately from the receiver proper 9 or if it is integrally mounted with the receiver proper 9, together with the receiver proper 9.

When the pipe 1 is buried underground as shown in Figure 1, or is installed within a wall 3, as shown in Figure 2, is inspected, the pipe 1 is cut at an exposed portion of an extension (or a branch) of the pipe 1, and the transmitting antenna 8 is installed at the end. Then, electromagnetic waves are supplied from the generation means of the transmitter proper 7 through the coaxial cable 12 to the transmitting antenna 8, and are propagated in the pipe 1 in a mode according to the arrangement of the transmitting antenna proper 13: If electromagnetic waves of a predetermined frequency higher than the cut off frequency are supplied from the transmitter proper 7 to the transmitting antenna 8, the pipe 1 acts as a wave guiding channel similar to a circular waveguide for the electromagnetic waves, and electromagnetic waves can be propagated according to the predetermined mode.

For example, for propagation of electromagnetic waves in the $TE_{11}$ mode, which is the propagation mode of the lowest order of the transmitting antenna proper 13, the frequency of the electromagnetic eaves supplied to the transmitting antenna proper 13 must be higher then a cut-off frequency represented by the following formula:

$$\text{Cut-off frequency} = \frac{\text{Light velocity/Cut-off wavelength}}{\text{Light velocity/\{1.706 x Inner diameter of pipe 1\}}}$$

Thus, the cut-off frequency of a pipe of 100 mm inner diameter is about 1.8 GHz, the cut-off frequency of a pipe of 80 mm inner diameter is about 2.2 GHz. The cut-off frequency of a pipe of 50 mm inner diameter is about 3.5 GHz. The cut-off frequencies are unique to the $TE_{11}$ mode, and in other propagation modes, such as $TE_{01}$, $TM_{01}$, ...modes, respectively different unique cut-off frequencies exist.

Electromagnetic waves are propagated in the pipe 1 by the transmitter 5, the receiving antenna 10 of the receiver 6 is moved along the outside of the pipe 1 so as to receive electromagnetic waves. A piping diagram or design drawing, or a pipe locator, etc. can be used as an aid to moving the receiving antenna 10 along the pipe 1, if it is buried under the ground 2 or installed within a wall 3 and hence not exposed.

Electromagnetic waves propagated in the pipe 1 as described above do not normally leak outside the pipe 1, but if there is a damaged portion 15 of the pipe, such as a hole formed by corrosion or a crack, etc., they will leak from that portion 15. Therefore, a damaged portion 15 can detected by receiving leaking electromagnetic waves at the receiver 6 through the receiving antenna 10.

If the receiving antenna 10 is non-directional or is sharply directional, and moved in parallel with its direction turned toward the pipe 1, the level of the electromagnetic waves received by the receiver 6 is highest when the receiving antenna 10 is nearest the damaged portion 15. The location of the receiving antenna 10 at which the level of electromagnetic waves received by the receiver 4 becomes a peak is the detected location of the damaged portion 15. When the pipe 1 is buried, the location below the receiving antenna 10 at which the level of electromagnetic waves received becomes a peak is similarly identified as the location of the damaged portion 15; so also when the pipe 1 is installed within a wall 3.

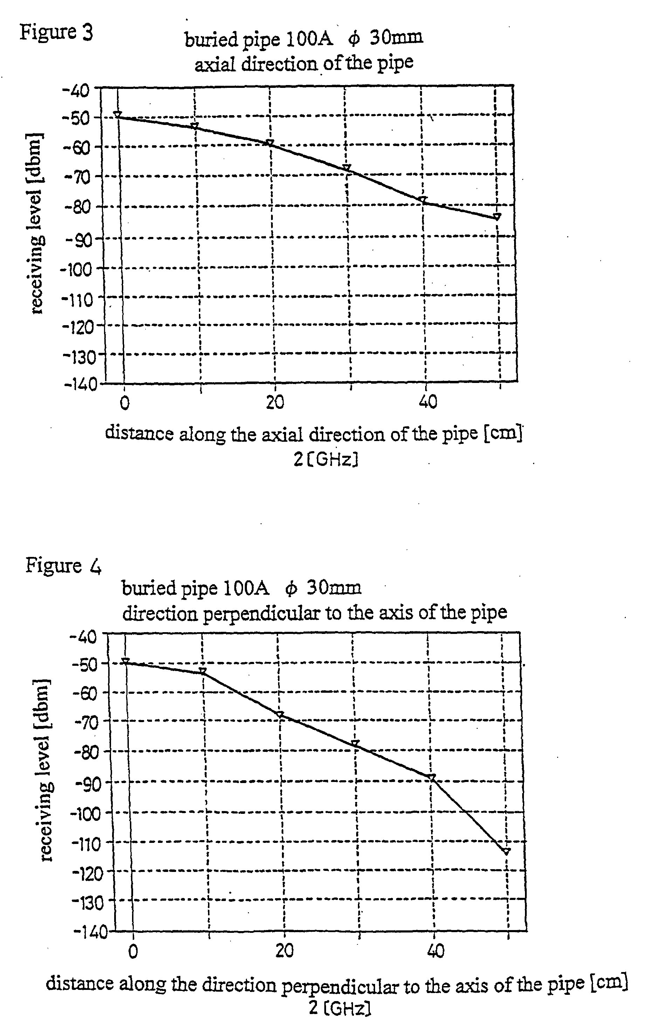

A test pipe of 100mm inner diameter with a 30 mm diameter hole drilled as an artificial defect on the top side was buried under a 10 cm thick concrete layer (with reinforcing bars at the bottom), 10 cm thick crushed stone layer and 10 cm thick soil layer (in order from the ground surface) and electromagnetic waves of 2 GHz in frequency and 25 dbm were propagated from the pipe end, whilst the receiving antenna was moved on the ground surface in a direction axial and then in a direction perpendicular to the length of the pipe so as to receive the electromagnetic waves leaking from the hole. The levels measured are shown in Figures 3 and 4. Figure 3 shows the case in which the antenna is moved in the axial direction, and Figure 4 shows the case in which the antenna is moved in the perpendicular direction. In both cases, the distance 0 on the abscissa of the graphs indicates that the receiving antenna is located directly above the hole.

From the results, it is apparent, that since the level of electromagnetic waves received is highest, i.e. a peak, when the receiving antenna is nearest the hole, the location of the hole is detected in response to that peak.

The level of electromagnetic waves received can be confirmed by reference to a reading on a level meter. Alternatively the volume or frequency can be changed in response to the level of electromagnetic waves received, so to allow confirmation to be distinguished from noise.

Further, if the electromagnetic waves propagated in the pipe are modulated by the transmitter proper 7 to contain human recognisable information signals such as audio signals or visual signals, and are demodulated by the receiver proper 9 for output, then the output allows easy confirmation that the received electromagnetic waves are predetermined electromagnetic waves as opposed to noise. This can be achieved by providing the transmitter proper 7 with such components as a modulator and amplifier, and the receiver proper 9 with such components as a detector, demodulator, amplifier, monitor, speaker, etc. (not illustrated in the drawings).

Preferably the electromagnetic waves leaking from the damaged portion 15 of the pipe 1 will be received by the receiver 6 at a proper receiving level irrespective of the environment in which the pipe 1 is found. If the pipe 1 is buried underground, it may be buried at a various depths or in various soils, and if the pipe 1 is installed within a wall, it may be at various distances from the receiving antenna with various material there between. Therefore, if electromagnetic waves are always transmitted at the same level and received at the same sensitivity, the level of received electromagnetic waves is not always appropriate.

The transmitter 5 is therefore provided with a device (not illustrated) for adjusting the intensity of the transmitted electromagnetic waves . The adjusting device allows the level adjustment to ensure reliable inspection without making the level transmitted too high to suit the capacity of the receiver or the surrounding noise. At the beginning of the inspection, the electromagnetic waves transmitted from the transmitter 5 are set at a high level, and the receiving sensitivity of the receiver 6 is also set at a high level so that if the electromagnetic waves are always received at that level the level transmitted may be lowered, or the receiving sensitivity may be lowered.

If the electromagnetic waves are received through a wide range of movement of the receiving antenna 8, not allowing the peak of the level of electromagnetic waves received to be identified, the level transmitted is gradually lowered, so as to narrow the receiving range of the electromagnetic waves and allow detection of a peak. In this way, the portion of the pipe leaking electromagnetic waves, i.e., the location of the damaged portion 15 of the pipes can be accurately detected. The adjustment of the level transmitted may be effected in response to the level of electromagnetic waves received, by connection of the transmitter 5 to the receiver 6 by wireless or wired communication means.

As mentioned above, the frequency of the electromagnetic waves supplied to the transmitting antenna 8 are required to be higher than the cut-off frequency corresponding to the propagation mode, but because a higher frequency is generally more attenuated in soil, the frequency will be preferably set at a level as low as possible. Therefore, when the element to be inspected is a buried pipe, the frequency of the electromagnetic waves propagated in the pipe is preferably close to the cut-off frequency. However, since there may be a pipe smaller in inner diameter than the other pipes of the piping system, the frequency of electromagnetic waves is preferably higher than the cut-off frequency for that pipe to allow propagation therein.

Other embodiments of the transmitting antenna for driving and propagating electromagnetic waves to the pipe 1 to be inspected are described below.

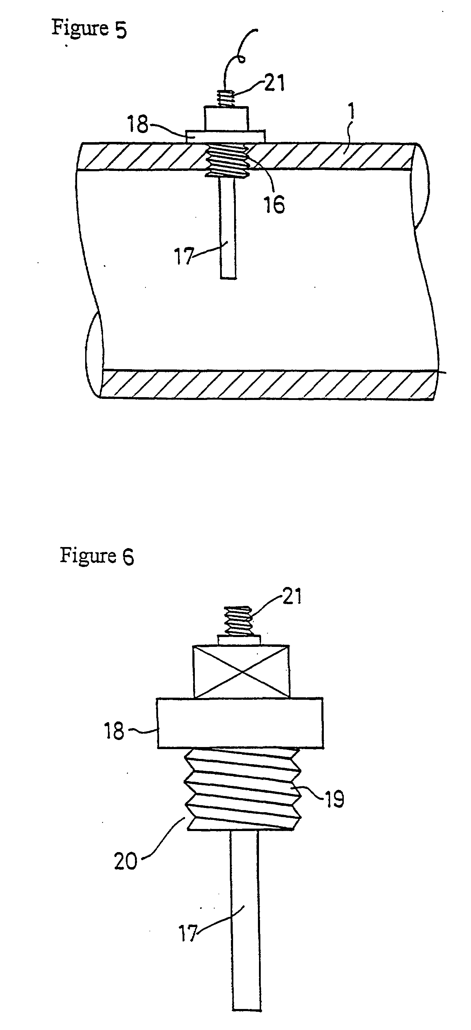

With reference to Figures 5 and 6, a hole drilled in the wall of the pipe 1 to be inspected is provided with internal threads so as to form an antenna installation hole 16. A coaxially formed antenna 20 with a probe 17 protruding at the centre and external threads 19 formed around an outside member 18 fitted to the antenna installation hole 16 by engaging the external threads with the internal threads of the hole, and locates the probe 17 in the pipe 1. At the rear of the outside member 18, a coaxial connector 21 is provided.

By this means it is not required that the pipe 1 is in the arrangement of Figure 1, and the transmitting antenna is easily installed. Further, if the pipe 1 is a city gas supply pipe, the transmitting antenna can be installed without stopping gas supply.

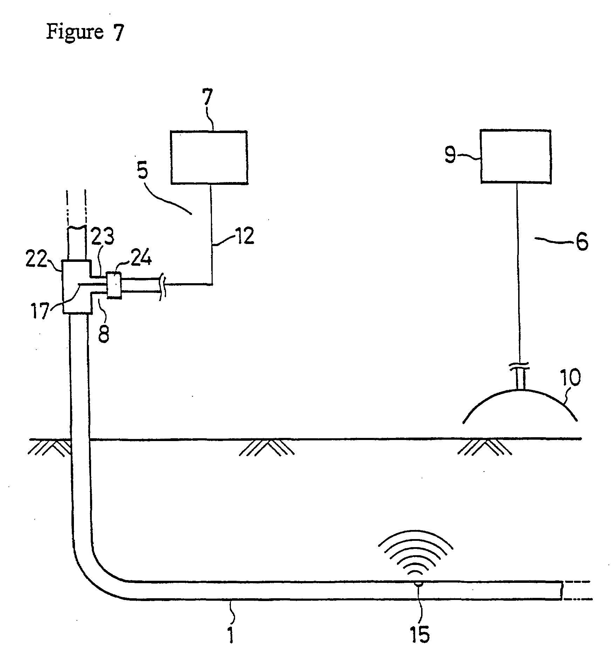

Figures 7 to 12 show other embodiments of the transmitting antenna. Figure 7 shows a typical arrangement in which a transmitting antenna is used for the detection of a leak point in a gas pipe.

A tee 22 is pre-installed around the pipe 1 and the central branch opening 23 of the tee 22 closed by a threaded cover 24. In this embodiment, the cover 24 is used to form part of the transmitted antenna.

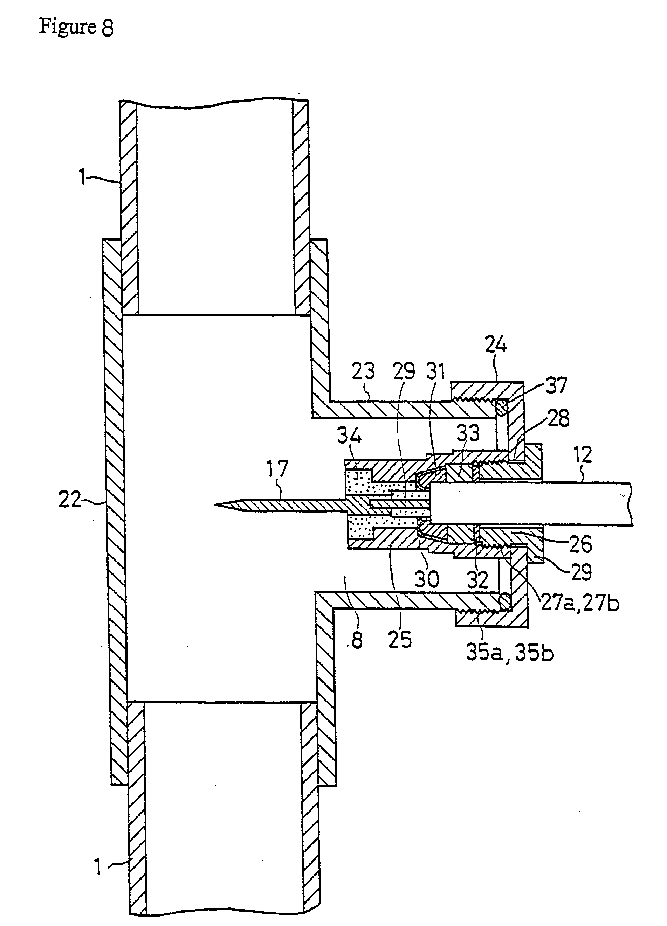

Figures 8 to 12 show embodiments of the transmitting antenna of Figure 7.

Figure 8 shows a support 25, engaged with a lock nut by threads 27. Lock nut 26 is inserted inside an installation hole 28 formed at the centre of the cover 24 and its threads 27as are engaged, by tightening, with the threads 27b of the support 25 arranged behind the installation hole 28 to the point at which it is stopped the collar 28a of the lock nut 26 and the support 25. Prior to threaded engagement, the tip a coaxial cable 12 inserted in the lock nut 26 so that a central lead 29 is protruding and a braid of shielded wire 30 is spread along a clamp 31. When threaded engagement is to be made a washer 32 and a gasket 33 are added and tightening made so as to achieve installation by bringing shielded wire 30 into pressure contact with the inner wall of the support 25. The central lead 29 has a linearly formed probe 17 bonded at its tip, and the probe 17 is located at the centre of the support 25 by an insulator 34. Threads 35a of the cover 24 are engaged with the threads 35b of the central branch opening 23 of the tee 22 by tightening, so as to close the opening 23.

A shielding material 37, in the form of an O ring, made of a conductive rubber or soft metal, etc., may be placed between the opening 23 and the inside of the cover 24, so that when the cover 24 is tightened by engagement of threads 35a and 35b, the shielding material 37 is kept in pressure contact with the inside of the cover 24 so as to shield against the leak of electromagnetic waves. A further shield may be formed by locating a shielding material between the threads 35a and 35b, for example, by wrapping threads 35b with filaments made of a soft metal, or coating them with a conductive compound, so that when threads 35a are engaged with threads 35b, the deformed filaments or conductive compound is maintained in the clearance between threads 35a and 35b.

In this arrangement electromagnetic waves supplied from the transmitter proper 7 by the coaxial cable 12 to the transmitting antenna 13, generate electromagnetic waves in the tee 22, in a mode corresponding to the electric field experienced by the probe 17, which are propagated from the tee 22 to the pipe 1. The pipe 1 propagates electromagnetic waves in a mode similar to a circular waveguide. In the case of Figure 8, an electromagnetic field of $TM_{01}$ mode is formed for propagation. If a damaged portion 15 exists in the pipe 1, such as a hole, the electromagnetic waves leak outside from the damaged portion 15, and are received through the receiving antenna by the receiver proper 9, whereby to detect the damaged portion 15.

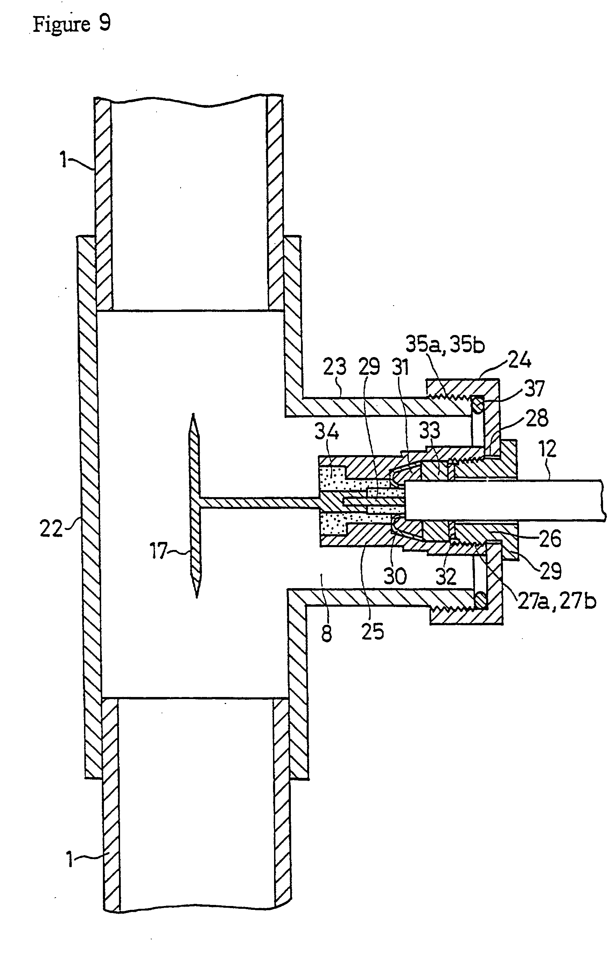

Figure 9 shows a modified example of Figure 8. In this arrangement, the probe 17 is formed differently from that of Figure 8 and is not simply linear but is T shaped with tips turned in the axial direction of the tee 22. Other parts of the arrangement are identical to that Figure 8, and given the same numerals for the avoidance of double explanation.

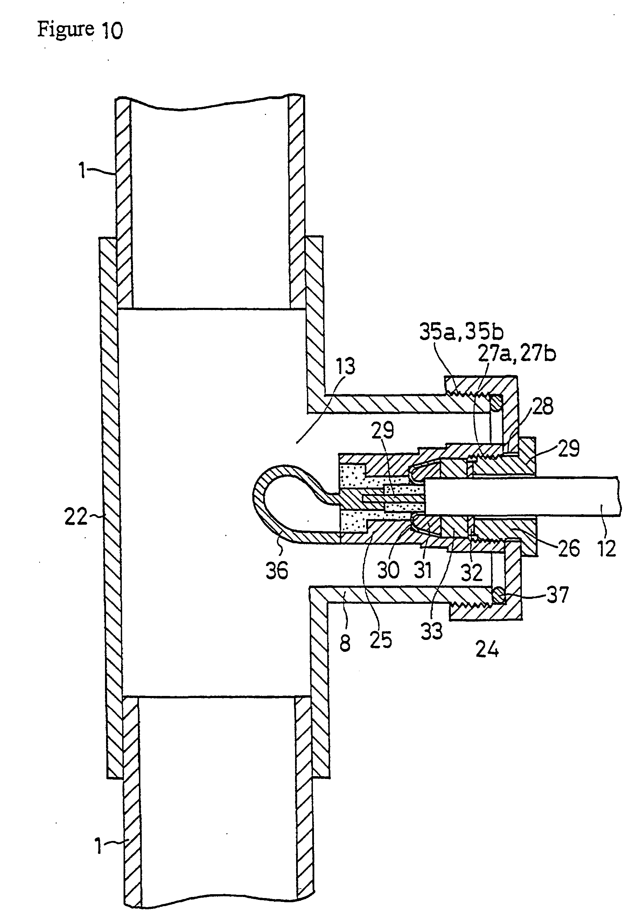

Figure 10 shows an arrangement in which the probe is a loop 36 protruding inside the cover 24. The loop 36 is formed by connecting a conductor between the tip of the central lead 29 and the tip of the support 25. Other parts of the arrangements are identical with those of Figure 8, and are given the same numerals for the avoidance of double explanation. In this embodiment, the loop 36 has its axial direction kept in the tangential direction of the inside circle of the tee 22. An electromagnetic field of $TM_{10}$ mode is formed for propagation in the pipe 1 as in the arrangement of Figure 8.

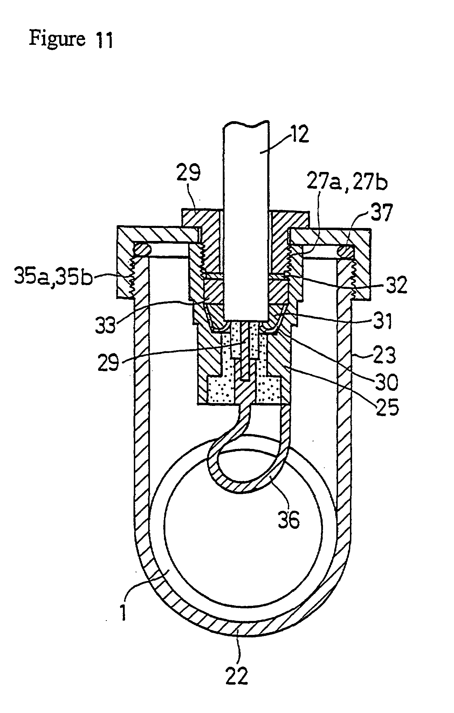

Figure 11 shows a modification of the arrangement of Figure 10 in which only the direction of the axis of the loop 36 is different. Other parts of the arrangement are given the same numerals for the avoidance of double explanation. In this embodiment, the loop 36 has its axial direction kept in the axial direction of the tee 22. An electromagnetic field of $TE_{10}$ mode is formed for propagation in the pipe.

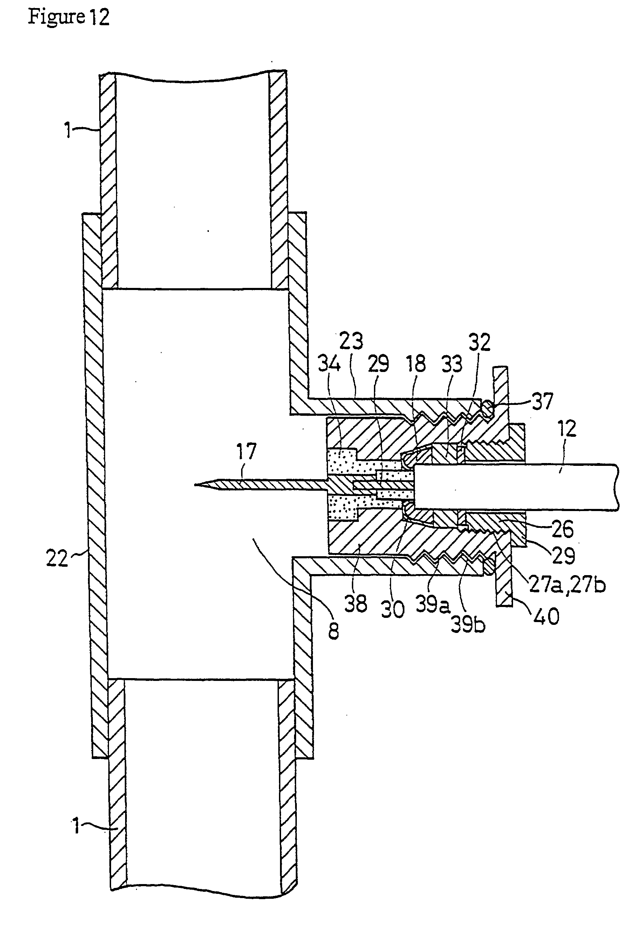

Figure 12 shows a modification to the arrangement of Figure 8 in which the cover 24 is threadedly engaged with the inside of the opening 23. A support 38, corresponding to the support 25 of Figure 8 has threads 39a formed around it which are engaged with the threads 39b formed inside the central branch opening of the tee 22. The support 38 also has a collar 40 at one end. Other parts of the arrangement are the same as the arrangement of Figure 8 and are given the same numerals for the avoidance of double explanation.

The mechanism for supporting the coaxial cable 12 by the cover 24, the structure of the probe 17 and the loop 36 at the tip of the coaxial cable 12, and the mechanism for supporting the probe and the loop 36 can be the same as those adopted in conventional coaxial waveguide transducers.

In the above embodiments of the present invention, the transmitting antenna 13 introduces electromagnetic waves into the pipe from tee 22 which is installed as part of the piping system pipe 1, and it is not necessary therefore to cut one end of the pipe and stop any gas supply if the piping system were used for a city gas supply network. Further, the leak of electromagnetic waves from tee 22 can be reliably prevented.

In the inspection method described above, electromagnetic waves are introduced from transmitting antenna 13 of transmitter 5 into the pipe 1 for propagation, and electromagnetic waves leaking from a damaged portion 15 of the pipe 1 are received by receiver 6 through the receiving antenna moved along and outside of the pipe. Contrary to this method, it is also possible to move the transmitting antenna 13 of the transmitter along and outside of the pipe 1, whilst transmitting electromagnetic waves towards the pipe 1, to the receiving antenna 10 of the receiver 6 installed at a suitable place within the pipe 1.

According to this latter method (not illustrated in the drawings), the electromagnetic waves transmitted from outside the pipe 1 enter the pipe 1 through the damaged portion and are propagated in the pipe 1, to the receiving antenna, and the receiver 6 so as to allow the existence of the damaged portion to be detected. Since the level of the electromagnetic waves entering the damaged portion and received by the receiver is highest at a location where the transmitting antenna is nearest the damaged portion, the location of the damaged portion in the pipe is accurately detected as the location of the antenna at which the level of received electromagnetic waves becomes a peak.

In this method, the transmitter and receiver can be comprised as described before, with the receiving antenna now being selected to comprise features of the transmitting antenna described above.

The receiving antenna can, however, be moved in relation to the movement of the transmitting antenna, without being fixed in the pipe, so as to receive the electromagnetic waves entering the pipe from the outside. In this case, in addition to the location of transmitting antenna at which the level of received electromagnetic waves becomes a peak, the location of the receiving antenna can also be taken into account for accurately detecting the damaged portion.

In the above description, the portions of the pipe where electromagnetic waves leak, are identified as damaged portions 15 having, for example, holes formed by corrosion and cracks in the pipe. However, the joints between pipes of a piping system can also be detected.

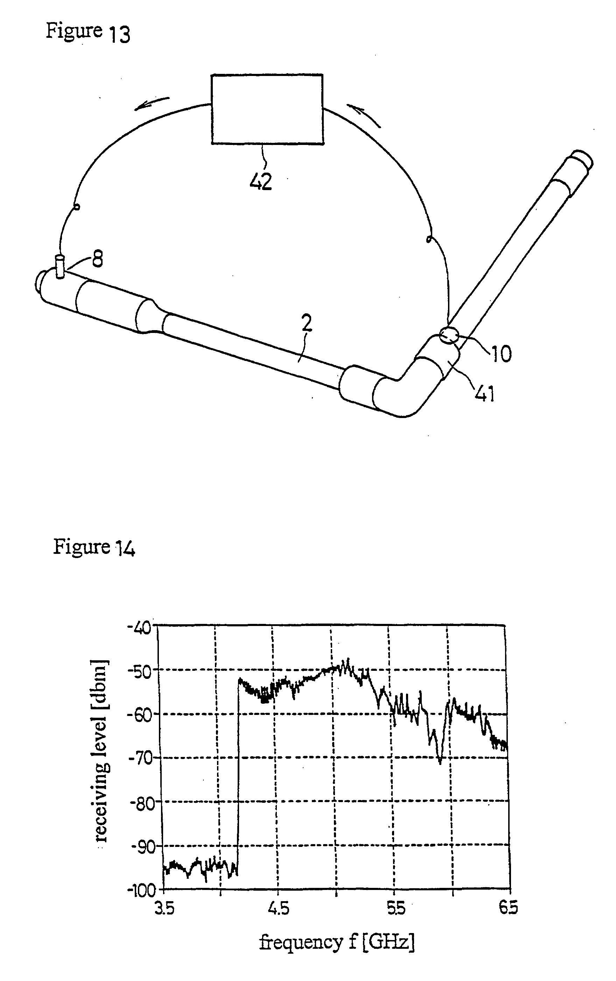

Figure 13 shows a system for measuring the leak of electromagnetic waves from a joint 41 within a piping system. A network analyser 42 which operates electromagnetic waves on a transmission side and measures the level of electromagnetic waves received with the receiving antenna 10 on a receiving side is located near the joint 41. The pipe line sections are 40 mm minimum diameter, and the cut-off frequency of electromagnetic waves is about 4.3 GHz.

Figure 14 shows the results of measurement. It can be seen that at frequencies higher than about 4.3 GHz and close to the above cut-off frequency, electromagnetic waves leak from a joint.

If the above inspection method is applied to a piping system with joints, electromagnetic waves will leak through the rubber ring or gasket when the joint is a mechanical joint, or through a gasket if it is a flange joint, or through a nonconductive member such as a shielding material if it is a screw joint.

Since electromagnetic waves propagated for a relatively long distance within a piping system will leak slightly at every joint, the excitation of electromagnetic waves at continual plural joints allows the location of each joint to be detected by reference to each peak in the level of electromagnetic waves received by the receiver. If the receiving antenna is sharply directional, and is moved along the pipe 1 (the route in which the pipe 1 is estimated to be buried by reference to any informational material such as drawings), with sharp changes in direction to detect a peak, the location of the joint can be accurately detected by reference to the direction of the receiving antenna corresponding to the peak, with the influence of external noise minimised. However, if the receiving antenna used is non-directional or weakly directional, it can be moved along the pipe, and the location at which the level of electromagnetic waves received becomes a peak can be detected as the location right above the joint.

Because the quantity of leaking electromagnetic waves increases if the joint is loosely tightened, the looseness of a joint can also be detected in reference to the level of electromagnetic waves received. At a particular joint, if the receiving conditions such as the distance from the receiving antenna, direction, etc. are the same as at other joints, the level of electromagnetic waves leaking from the joint and received depends on the looseness of that joint. So, if the level measured is compared with data of levels measured in the past and found to be the same, it is estimated that the joint is sound, and if found to be larger it is estimated that the joint is loose.

To estimate the looseness of a joint of metallic pipe in reference to the level of electromagnetic waves received, it is necessary that the receiving conditions such as the distance from the receiving antenna, direction, etc. are the same as mentioned above and that the electromagnetic wave characteristics of the surroundings of the pipe buried underground or installed in a wall are constant. Unless these conditions are satisfied, it is difficult to estimate the looseness of a joint in reference to the level of electromagnetic waves received. However, even for a buried pipe, the looseness of a joint can be estimated when all the above conditions are satisfied. In the case of an exposed pipe, for which receiving conditions can be easily made the same, the estimation is possible.

In the above inspection of joints, the transmitting antenna can, as mentioned before, also be arranged outside the pipe while the receiving antenna can be arranged inside the pipe for detecting the electromagnetic waves entering through the joints from outside.

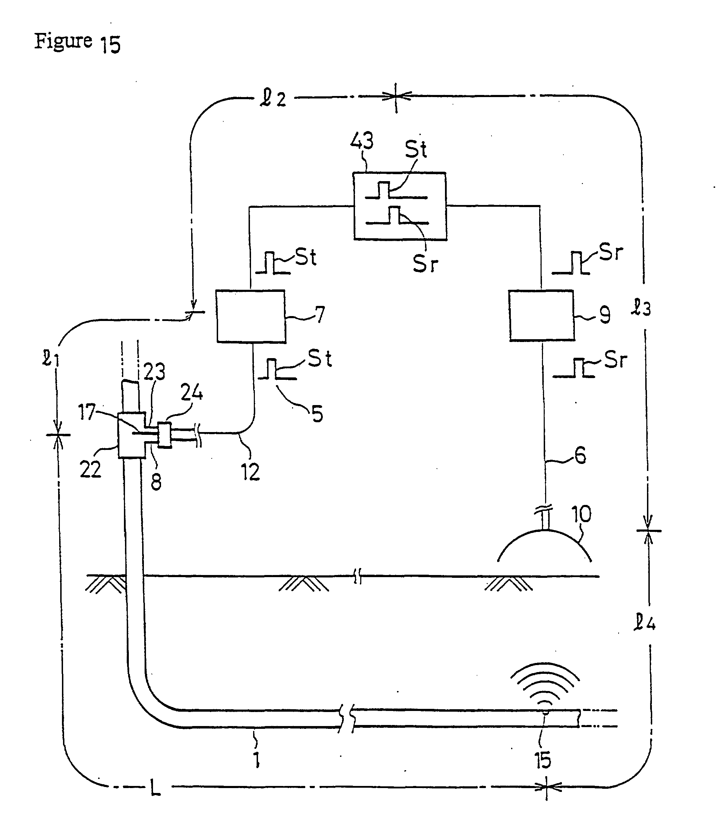

In one embodiment of the present invention shown in Figure 15, the location of a leak portion of an exposed pipe arising from damage such as a corrosion hole or from a joint can be detected, and in addition, the distance from a properly set reference location of the pipe to the detected leak portion can be measured.

In this arrangement and as shown in Figure 7, the transmitting antenna 8 is installed in the cover 24 of the central branch opening 23 of tee, so that the probe 17 or loop (not illustrated) protrudes into tee 22. A processor, 43 is provided but otherwise the parts of the arrangement are the same as that of Figure 7 and are given the same numerals for the avoidance of double explanation.

On the transmitter 5 side of the arrangement, the transmitting antenna 8 introduces electromagnetic waves into the pipe 1, and a worker on the receiver 6 side moves the receiving antenna 10, to find the electromagnetic waves leaking from a damaged portion 15 of the pipe 1 and detect its location on the ground. If the receiving antenna 10 used is non-directional or weakly directional, it is moved along the pipe 1 (the route where the pipe 1 is estimated to be buried based on any informational material such as drawings), and the location where the level of received electromagnetic waves becomes a peak is detected as the location directly above the damaged portion 15. If the receiving antenna 10 is sharply directional, the location directly above the damaged portion is detected at high resolution, with minimisation of external noise.

The processor 43 compares the electromagnetic waves transmitted by the transmitter 5 and the electromagnetic waves detected by the receiver 6, so as to obtain a propagation time for the electromagnetic waves, and the distance between the transmitting antenna 8, installed at the open end of the pipe 1, and the damaged portion 15 of the pipe where the leak is detected.

To obtain a propagation time by comparison of electromagnetic waves transmitted with electromagnetic waves received, the transmitted electromagnetic waves are modulated by any of the various modulation methods including pulse modulation, amplitude modulation, frequency modulation or code modulation, and the time difference between the transmitted modulated electromagnetic waves and the received electromagnetic waves is measured by any known method including direct measurement, detection of phase difference of detection of deviation in the coefficient of correlation. Preferably, the pulse compression method used for improving S/N, etc. in radar and ultrasonic measurement is applied, and the transmitted electromagnetic waves are modulated by linear FM (chirp waves), barker code, M series code, complementary series code, etc.

The processor 43 sends a modulated feed signal, St from the transmitter proper 7 through the coaxial cable 12 to the transmitting antenna 8, for propagating electromagnetic waves in the pipe 1. At the same time a signal, St, similar to the feed signal, is sent to the processor 43 for comparison with the received signal. The signal Sr of electromagnetic waves leaking from the damaged portion 15 of the pipe and received by the receiver 6 is pre-processed by amplification etc. as required, and sent to the processor 43 for comparison with the transmitted signal St.

The processor 43 compares the transmitted signal St with the received signal Sr, and measures the time difference by any of the methods stated above . In the case of pulse modulation, the time difference between pulses is directly measured, whereas in the case of amplitude modulation, the phase difference between the modulated transmitted signal St and the modulated received signal Sr is measured and used to calculate the time difference. In the case of code modulation or any other modulation, the deviation in the coefficient of correlation is detected and used to calculate the time difference.

The time difference between the transmitted signal St and the received signal Sr includes the propagation time of the electromagnetic waves along a route L (see Figures 15) from the transmitting antenna 8 to the damaged portion 15, the propagation time along route $1_1$ from the transmitter proper 7 to the transmitting antenna 8, the propagation time along a route $1_2$ from the transmitter proper 7 to the processor 43, the propagation time along a route $1_3$ from the antenna 10 through the receiver proper 9 to the processor 43, and the propagation time along a route $1_4$ from the damaged portion 15 to the antenna 10. That is, the time difference obtained is not just the propagation time of electromagnetic waves along the route L from the transmitting antenna 8 to the damaged portion 15.

However, the propagation time of electromagnetic waves along routes $1_1$, $1_2$ and $1_3$ does not change, and is measured beforehand, whereas the distance along route 14 is the sum of the buried depth of the pipe 1 and the height of the receiving antenna from the ground. The former distance is known by reference to a piping work diagram, etc., and the latter distance is obtained by measurement. The propagation time of the electromagnetic waves along route L is obtained by subtraction of the propagation times along routes $1_1$, $1_2$, $1_3$ and $1_4$ from the time difference between the transmitted signal St and the received signal Sr.

The propagation time of electromagnetic waves along route L from the transmitting antenna 8 to the damaged portion 15 allows the distance of route L to be calculated.

In summary then, the location of a damaged portion in the pipe 1, such as a hole formed by corrosion, is detected on the ground by detecting leaking electromagnetic waves, and the distance from the transmitting antenna 8 to the damaged portion 15 is obtained by comparison of the modulated electromagnetic waves transmitted by the transmitter 6 with electromagnetic waves received by the receiver 5 so as to measure the propagation time from the transmitting antenna 8 to the damaged portion 15 of the pipe. A damaged portion 15 of the pipe, such as a hole formed by corrosion, can therefore be efficiently repaired from inside the pipe by, for example, closing it with a resin using a pig.

In inspection methods using either a transmitting antenna or a receiving antenna installed in the pipe, the electromagnetic waves are preferably varied over time so as to avoid a fixed electromagnetic field distribution in the pipe.

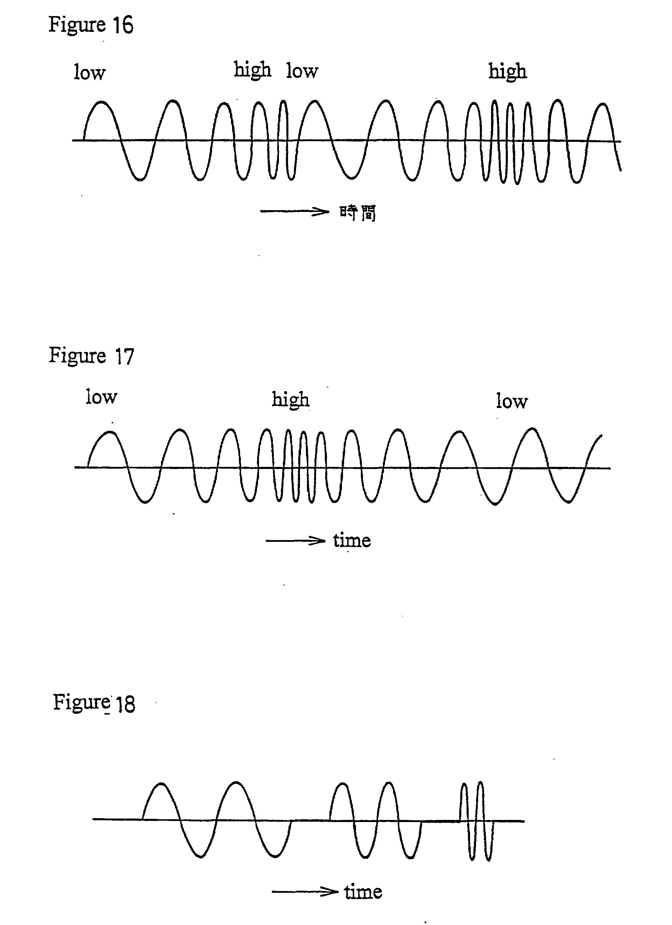

The transmitter is, therefore, provided with means for changing the frequency of the electromagnetic waves over time (in addition to the basic components of an oscillator and amplifier). Figures 16 to 18 show typical frequency changes over time. In Figures 16 and 17, the frequency is continuously changed by sweeping over a certain range (in Figure 16 as low→high, low→ high, low → high; in Figure 17 as low →high, low→ high, low→ high). One means to obtain such frequency changes is to use, a sweep oscillator as the oscillator of the transmitter. In Figure 18, the frequency changed is stepwise, and is obtained using a programmable oscillator which allows plural oscillation frequencies to be set as the oscillator of the transmitter.

Generally, electromagnetic waves propagated in the pipe have magnetic field components in the pipe parallel to the direction of, and electric field components perpendicular to the direction of the pipe wall which cause the leak of electromagnetic waves at a damaged portion or at a joint, etc. in the pipe. However, electromagnetic waves of a certain frequency at a certain point in time may not form the above mentioned electric and magnetic field components and leakage of electromagnetic fields hardly occurs. If electromagnetic waves of that certain frequency are continuously propagated it is difficult to detect a damaged portion of a pipe. However, the frequency of electromagnetic waves driven in the pipe is changed over time, so that even if the electric and magnetic field components hardly cause a leak from a damaged portion at a certain frequency at a certain point of time, the electromagnetic field distribution is changed to a different frequency at the next point of time, so to cause electromagnetic waves to leak from the damaged portion and allow detection.

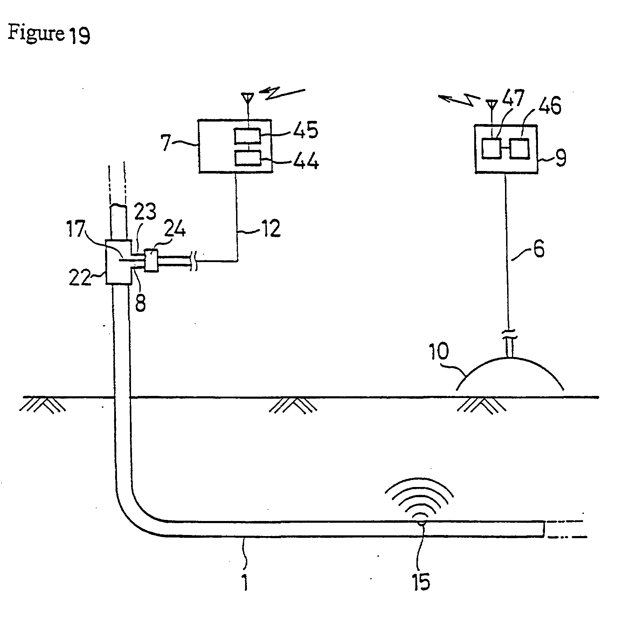

One embodiment of the present invention (shown in Figures 19 to 21) also relates to a method of detecting leaking electromagnetic waves by moving a receiving antenna along and outside a pipe but more reliably and easily distinguishes leaking electromagnetic waves from external noise and so avoids errors in the detection of damaged portions of the pipe.

The transmitter proper 7 is provided with an ON-OFF control means 44 together receiving means 45 for receiving an ON-OFF control signal. The ON-OFF control means 44 is arranged to turn the oscillator, or the wave guiding channel, or other on and off. The receiver proper 9 is now provided with a remote control switch for activating the ON-OFF control means 44 of the transmitter proper 7, in addition to the basic components required for receiving electromagnetic waves (detector, amplifier, signal processor, and received signal level indicator) The remote control switch comprises a control switch 46 and a switch state transmitting means 47. Although the transmitting means 47 and the receiving means 45 are shown as wireless communication means in the drawings, they may also be wired communication means.

A worker on the transmitter proper 7 side of the arrangements installs the transmitting antenna 8 into the tee 22 provided on an extension of, for example, a gas pipe 1 to be inspected and connects the transmitting antenna 8 with the transmitter proper 7. A worker on the receiver proper 9 side operates the control switch 46, and sends an ON command from the transmitting means 47 to the ON-OFF control means 44 through the receiving means 45 of the transmitter proper 7, so as to propagate electromagnetic waves from the transmitting antenna 8. The worker then moves the receiving antenna 10 to search for electromagnetic waves, watching the level of electromagnetic waves received and indicated on the indicator of the receiver proper 9.

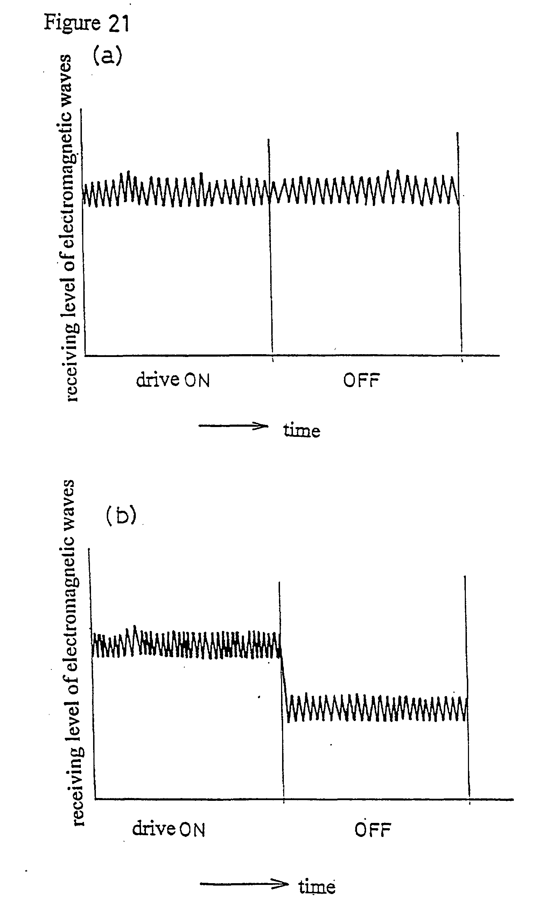

When the indicated level becomes high, the worker operates the control switch 46, to send an OFF command to the ON-OFF control means of the transmitter proper 7, and to turn off the propagation of electromagnetic waves from the transmitting antenna 8. If the electromagnetic waves received in the ON state contain electromagnetic waves leaking from a damaged portion 15 of the pipe 1, the indicated level declines (shown in Figure 21 (b)) when the propagation is turned off. If, on the other hand, the electromagnetic waves received in the ON state do not contain electromagnetic waves leaking from a damaged portion 15 of the pipe but arise from noise only, the indicated level does not change (shown in Figure 21(a)) when the propagation is turned off. Therefore, if the indicated level in the OFF state is compared with the indicated level in the ON state, leaking electromagnetic waves may be identified, and the damaged portion detected. The comparison can be made by a worker but may also be automated.

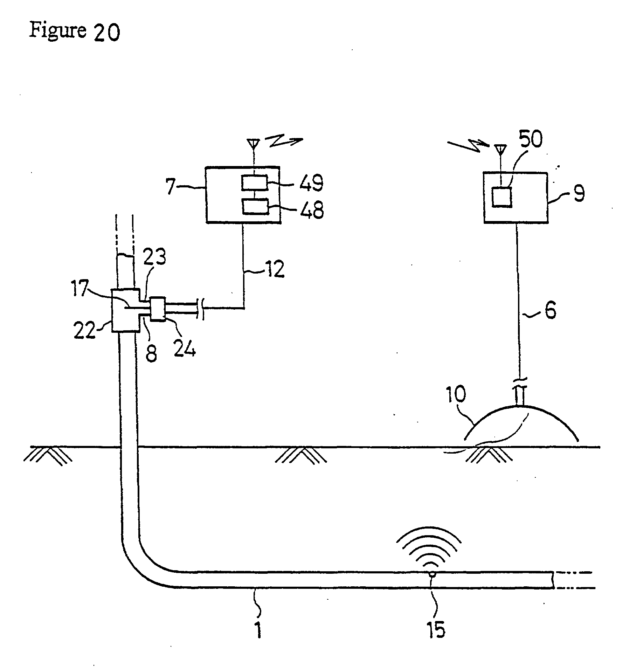

Figure 20 shows a further embodiment of the present invention in which the same components as those of Figure 19 are given the same numerals for the avoidance of double explanation.

The transmitter proper 7 is provided with an ON-OFF control means to turn on and off the propagation of electromagnetic waves by itself, as well as a transmitting means 49 for the signals synchronous with the ON and OFF actions. The receiver proper 9 is now provided with a receiving means 50 for receiving the signals synchronous with the ON and OFF actions.

In the arrangement of Figure 20, on the transmitter proper 7 side, the propagation of electromagnetic waves is turned on and off at times intervals pre-set in a memory means, etc. and on the receiver proper 9 side, the synchronous signal transmitted from the transmitter proper 7 side is received, to indicate the ON and OFF state. When a worker on the receiver proper 9 side detects a location where the indicated level is high, as in the arrangement of Figure 19, he can detect whether the electromagnetic waves received contain the electromagnetic waves leaking from a damaged portion 15 of the pipe 1, by comparison of the indicated level in the OFF state and the indicated level in the ON state.

In the methods described above, the electromagnetic waves transmitted from the transmitter are propagated in the pipe at a frequency higher than the cut-off frequency for the pipe to act as a wave guiding channel, but in the following two embodiments of the present invention, the frequency is kept lower than the cut-off frequency.

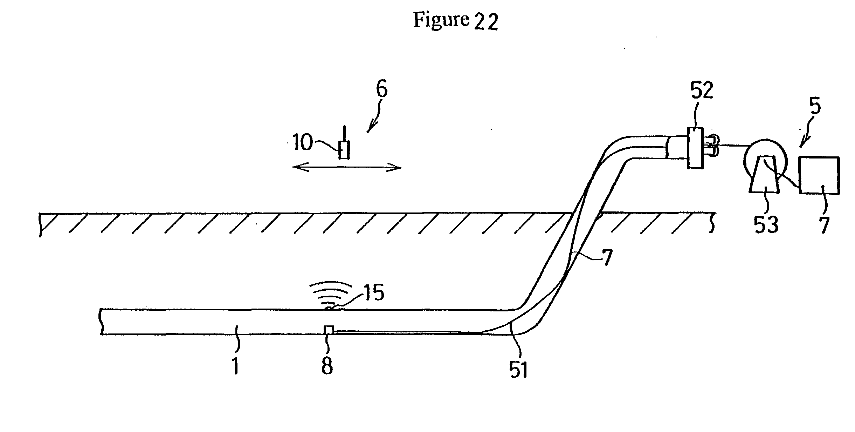

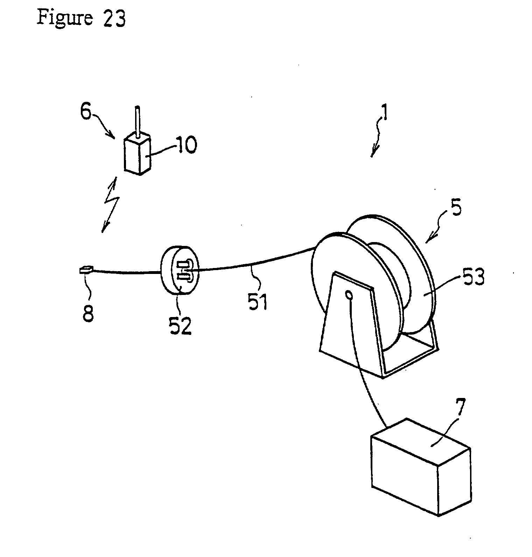

In one embodiment (shown in Figures 22 and 23) the transmitting antenna 8 of the transmitter 5 is moved together with the receiving antenna 10 of the receiver 6 and the location of the element concerned is detected by reference to the location of the transmitting antenna 8 at which the level of electromagnetic waves received by the receiver becomes a peak.

In this embodiment the cable 51 acts as a long antenna wire and is delivered by an unwinder 52 or wound by a winder 53, to move transmitting antenna 8, whilst electromagnetic waves of a frequency lower than the cut-off frequency of the pipe 1 are transmitted. At the same time the receiving antenna 10 is moved in relation to the movement of the transmitting antenna, so as to receive electromagnetic waves leaking from a damaged portion or joint of the pipe 1.

The electromagnetic waves from the transmitting antenna 8 are not propagated within the pipe 1 and are greatly attenuated over a short distance so that the quantity of electromagnetic waves leaking from the damaged portion 15 or joint of the pipe is largest when the transmitting antenna 8 is nearest that portion of the pipe. The level of electromagnetic waves received by the receiver 6 through the receiving antenna 10 therefore changes greatly when the antenna is near the leak making the peak outstanding and the leak detectable with high accuracy. Further, since the frequency is kept low the electromagnetic waves are less attenuated by the soil, etc. surrounding a buried pipe, so enhancing receiver sensitivity.

In the other embodiment (not illustrated) the transmitter and receiver are arranged in reverse so that the transmitting antenna of the transmitter is moved along and outside of the pipe whilst electromagnetic waves of a frequency lower then the cut-off frequency for the pipe to act as a wave guidance channel entering the pipe are received by a receiving antenna moving in relation to the transmitting antenna within the pipe. Where the level of electromagnetic waves received by the receiver becomes a peak, the location of a leak is detected.

Again since the entering electromagnetic waves are not propagated within the pipe, the level of electromagnetic waves becomes highest when the receiving antenna is nearest to the location of a leak. The level of electromagnetic waves received by the receiving antenna therefore changes greatly near the location of a leak making the peak more outstanding so enhancing the accuracy in the detection of the location of the leak.

Further, these methods can measure the route length L by providing for the length of the cable delivered by the unwinder to be measured etc.

As in the previously described methods the electromagnetic waves may be modulated by any proper information signals so as to distinguish whether the electromagnetic waves received by the receiver are those transmitted by the transmitter or just noise. In addition the effect of external noise can be reduced in the method moving the receiving antenna along and outside the pipe, by turning on and off the transmitted electromagnetic waves as previously described.

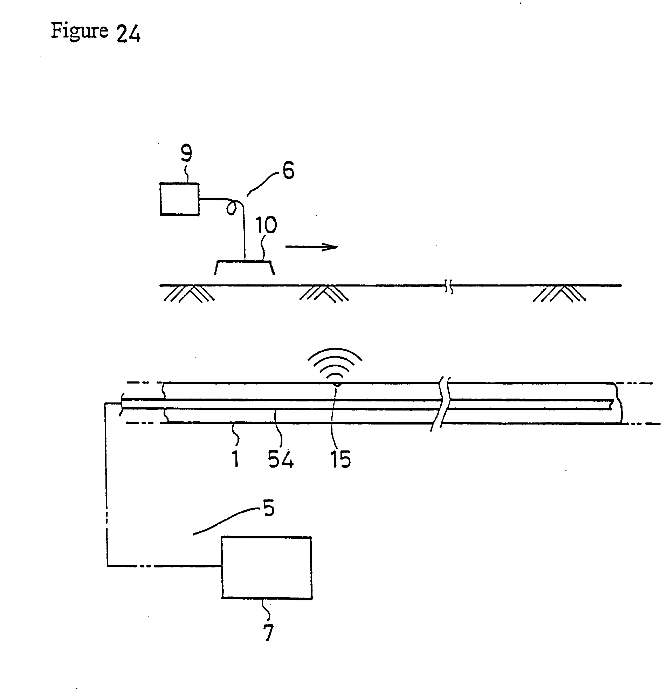

In another embodiment of the present invention (shown in Figure 24) in which the frequency of electromagnetic waves is kept at lower then the cut-off frequency of the pipe the receiving antenna or the transmitting antenna arranged in the pipe is made long so as to eliminate the necessity for movement.

A long transmitting antenna 54 with many radiating parts transmitting an directions perpendicular to the axis of the antenna is inserted in the testing range of the pipe, and electromagnetic waves are transmitted from these radiating parts whilst the receiving antenna, and if required the receiver proper 9, is moved outside of the pipe 1 along the testing range, so as to search for leaking electromagnetic waves.

Since the long transmitting antenna 54 has many radiating parts transmitting in directions perpendicular to the axis of the antenna it is not used outside of the pipe and only the receiving antenna 10 can be moved outside the pipe to search for the leaking electromagnetic waves. Again, since it is not required that the electromagnetic waves are propagated within the pipe the frequency used is not limited to be higher than the cut-off frequency for the pipe to act as a circular wave guide.

The advantage of using low frequency electromagnetic waves that attenuation by soil etc. can be kept small, is therefore obtained.

The long transmitting antenna 54 may be a leakage coaxial cable or a twisted pair leakage cable such as those used for mobile communication within a tunnel, etc. The cable can be inserted into the pipe 1, using an insertion mechanism, etc. which can be, for example, a conventional and widely used drive cable for an in-tube tester, etc. so that a gas pipe may be kept active.

Further, the long transmitting antenna 54 can comprise a helical turn, very much smaller than the wavelength of the electromagnetic waves radiated or of n times the wavelength (n is an integer of 2 or more) with the directionality of transmission perpendicular to its axis. A cable comprising such a helical wire and covered with an insulator can be used in a similar manner to the aforementioned cables.

The transmitting antenna 54 can, however, be formed by connecting many small antennas together so as to form a cable.

In an alternative arrangement the receiving antenna is made long and arranged in the pipe, whilst the transmitting antenna is moved outside and along the pipe .

As in other embodiments of the invention the electromagnetic waves can be modulated by proper informational signals, so that it can be distinguished whether the electromagnetic waves received are the electromagnetic waves transmitted by the transmitter or noise. Further, the level of received electromagnetic waves and the receiver sensitivity can be similarly adjusted. In addition, the effect of external noise may be reduced when the transmitting antenna is moved outside the pipe, and turned on and off as previously described.

If the piping system to be inspected is, for example, a city gas supply system, the present invention allows the leak of gas from a gas pipe to be detected by reference to electromagnetic waves leaking from the point at which the gas leak actually occurs, and not by reference to the point at which the gas leak is otherwise detected.

The present invention therefore accurately detects the point of gas leaks, but can also be applied to detect the locations of elements other than holes, such as joints of the piping system as well as the lengths of the routes to these elements. The present invention can also be applied for detecting damaged portions of pipes in various piping systems.

## Claims

1. A method for inspecting a pipe (15) using electromagnetic radiation comprising the steps of transmitting electromagnetic waves from the antenna (12) of a transmitter, receiving electromagnetic waves with the antenna (10) of a receiver whereby to determine the position along the pipe of an electromagnetic leakage point such as a joint or fault in the pipe (15), **characterised in that** it comprises the further steps of locating the transmitting antenna (12) inside or outside the pipe (15) and locating the receiving antenna (10) respectively outside or inside the pipe (15), effecting movement of at least one of the receiving and transmitting antenna (10, 12) with respect to the pipe, detecting in the received electromagnetic radiation a peak, the presence of which is not due to variation in separation of the transmitting and receiving antenna and identifying the position of the electromagnetic leakage point by reference to the position of the moving antenna or antennae when such a peak is detected.

2. A method as claimed in Claim 1, **characterised in that** the electromagnetic waves are transmitted at a frequency such that they are propagated within the pipe (15).

3. A method according to Claim 1 or Claim 2, **characterised in that** the transmitting antenna (12) is located at a fixed location and the receiving antenna (10) is moved with respect to it and the pipe (15) to detect said peak in the received electromagnetic radiation.

4. A method according to Claim 1 or Claim 2, **characterised in that** the receiving antenna (10) is located at a fixed location and the transmitting antenna (12) is moved with respect to it and the pipe to detect said peak in the received electromagnetic radiation.

5. A method according to Claim 1 or Claim 2, **characterised in that** the antennae of both the transmitter and the receiver are moved in relation to the pipe to detect said peak in the received electromagnetic radiation.

6. A method according to any preceding claim, **characterised in that** the frequency of the electromagnetic waves is changed over time.

7. A method according to any preceding claim, **characterised in that** a signal received by the receiver when the transmitter is turned on is compared with a signal received by the receiver when the transmitter is turned off whereby to facilitate in distinguishing the reception of electromagnetic waves caused by leakage at an electromagnetic wave leakage point in the pipe from the reception of electromagnetic waves from other sources.

8. A method according to Claim 7, **characterised in that** the transmitter is provided with transmission on/off control means and the receiver is provided with a remote control switch for operating transmitters on/off control means remotely.

9. A method according to Claim 7, **characterised in that** the transmitter is provided with transmission on/off control means and with means for transmitting to the receiver a signal representing the on/off transmission state of the transmitter.

10. A method according to any preceding claim, **characterised in that** the electromagnetic waves transmitted by the transmitter are modulated.

11. A method according to Claim 10, **characterised in that** the frequency of the electromagnetic waves transmitted by the transmitter is changed by sweep.

12. A method according to Claim 10, **characterised in that** the frequency of the electromagnetic waves transmitted by the transmitter is changed stepwise.

13. A method according to any of Claims 10 to 12, **characterised in that** the electromagnetic waves are modulated by human recognisable information signals.

14. A method according to any of Claims 10 to 13, **characterised in that** the electromagnetic waves received by the receiver are compared with the electromagnetic waves transmitted by the transmitter as modulated signals, to obtain the time difference; and the time difference is used to determine the propagation time of the electromagnetic waves from the point of transmission in the pipe to the leakage point whereby to determine the propagation distance in the pipe (15).

15. A method according to Claim 14, **characterised in that** the time difference is measured by reference to the phase difference between the electromagnetic waves detected by the receiver and the electromagnetic waves transmitted by the transmitter in terms of modulated signals.

16. A method according to any of Claims 10 to 15, **characterised in that** pulse compression techniques are employed in the transmission of electromagnetic waves by the transmitter and in the reception of electromagnetic waves by the receiver.

17. A method according to any preceding claim, **characterised in that** it includes the step of adjusting the intensity of the electromagnetic waves transmitted by the transmitter.

18. A method according to Claim 17, **characterised in that** the adjustment of the intensity is effected in response to the level of electromagnetic waves received by the receiver.

19. A method according to any preceding claim, **characterised in that** the electromagnetic wave leakage points in the pipe system are joints between adjacent pipes of the system and the level of the electromagnetic waves received by the receiver is referred to for estimating the state of each joint to be inspected.

20. A method according to any of Claims 1 to 13 or 16 to 19, **characterised in that** the frequency of the transmitted electromagnetic waves is lower than the cut-off frequency above which the pipe acts as a waveguide, and both the transmitter antenna and the receiver antenna are moved with respect to the pipe (15), one inside and one outside the pipe, to detect peaks in the received electromagnetic radiation, the position of both the transmitting antenna (12) and the receiving antenna (10) being used to determine the location of an electromagnetic wave leakage point when the said peak is detected.

21. A method according to any of Claims 1 to 13 or 16 to 19, **characterised in that** it includes the step of introducing into the pipe to be inspected an elongate transmitting or receiving antenna (10, 12) having a plurality of directional portions which are directional perpendicular to the length of the antenna, and moving a receiving or transmitting antenna (10, 12) respectively along outside the section of pipe housing the said elongate antenna while transmitting electromagnetic waves from the transmitting antenna (12) to the receiving antenna (10) and detecting the location of any electromagnetic wave leakage point in the section of the pipe housing the elongate antenna by reference to the position of the moving antenna when the said peak in the received electromagnetic waves is detected.

22. Apparatus for inspecting a pipe (15) using electromagnetic radiation, comprising a transmitter for transmitting electromagnetic waves from a transmitting antenna (12), a receiver for receiving electromagnetic waves at a receiving antenna (10) whereby to determine the position along the pipe (15) of an electromagnetic wave leakage point in the pipe (15), **characterised in that** the transmitting antenna (12) is located inside or outside the pipe (15) and the receiving antenna (10) is located respectively outside or inside the pipe (15) and means are provided for effecting movement of the transmitting antenna (12) and/or the receiving antenna (10) with respect to the pipe (15) and means for detecting in the electromagnetic radiation received at the receiver a peak the presence of which is not due to variation in separation of the transmitting and receiving antenna (12, 10) so that the position of the said electromagnetic leakage point is identified by reference to the position of the moving antenna or antennae when such a peak is detected.

23. Apparatus according to Claim 22, **characterised in that** the wall of the pipe to be inspected is drilled to have a hole, and internal threads are formed in it to make an antenna installation hole; and a coaxially formed antenna with a probe protruded at the centre and with external threads formed around an outside member is installed in the antenna installation hole with the internal and external threads engaged with each other, to locate the probe in the pipe, for constituting an antenna.

24. Apparatus according to Claim 22 or Claim 23, **characterised in that** the pipe to be inspected is cut off at an end, and a coaxially formed antenna with a probe protruded coaxially is installed in the cover closing the end, the cover being installed at the end for constituting an antenna.

25. Apparatus according to Claims 22, 23 or 24, **characterised in that** a probe protrudes inside the cover closing the central branch opening of a tee installed on the extension of the pipe to be inspected; the probe and an electromagnetic wave oscillator are connected by a coaxial cable; and the probe is located in the tee with the cover installed at the central branch opening to constitute an antenna.

26. Apparatus according to Claim 25, **characterised in that** the cover is threadedly engaged with the central branch opening of the tee, and a shielding material shaped line an O-ring is provided between the cover and the central branch opening of the tee.

27. Apparatus according to Claim 25 or Claim 26 **characterised in that** the cover is threadedly engaged with the central branch opening of the tee, and a shielding material is provided in the threadedly engaged portion.

28. Apparatus as claimed in any of Claims 22 to 27, **characterised in that** one of the antennae is an elongate multiple portion antenna the portions of which are directional in a direction perpendicular to the length of the antenna, and means for introducing the elongate antenna into a section of the pipe to be inspected.

29. Apparatus as claimed in Claim 28, **characterised in that** the elongate antenna is an elongate helical antenna with its directionality adjusted in directions perpendicular to the axis, or a leakage coaxial cable, or twisted pair leakage cable.

**Patentansprüche**

1. Verfahren zur Inspektion eines Rohres (15) mittels elektromagnetischer Strahlung, umfassend die Schritte des Sendens elektromagnetischer Wellen von der Antenne (12) eines Senders und des Empfangens elektromagnetischer Wellen mit der Antenne (10) eines Empfängers, wodurch die Lage einer elektromagnetischen Leckstelle, wie etwa einer Fuge oder eines Bruches in dem Rohr (15), entlang des Rohres festgestellt werden soll,
**dadurch gekennzeichnet, daß**
es desweiteren die Schritte des Anordnens der Sendeantenne (12) innerhalb oder außerhalb des Rohres (15) und des Anordnens der Empfangsantenne (10) entsprechend außerhalb oder innerhalb des Rohres (15), des Bewirkens einer Bewegung wenigstens einer der von der Empfangs- und der Sendeantenne (10, 12) gebildeten Antennen relativ zum Rohr, des Detektierens eines Peaks in der empfangenen elektromagnetischen Strahlung, dessen Vorhandensein nicht von einer Änderung der Beabstandung der Sende- und der Empfangsantenne abhängt, und des Identifizierens der Lage der elektromagnetischen Leckstelle durch Bezugnahme auf die Position der bewegten Antenne oder Antennen in dem Moment, in welchem ein derartiger Peak detektiert wird, umfaßt.

2. Verfahren nach Anspruch 1,
**dadurch gekennzeichnet, daß**
die elektromagnetischen Wellen mit einer solchen Frequenz ausgesendet werden, daß sie sich innerhalb des Rohres (15) ausbreiten.

**3.** Verfahren nach Anspruch 1 oder Anspruch 2,
**dadurch gekennzeichnet, daß**
die Sendeantenne (12) an einem festen Ort angeordnet ist und die Empfangsantenne (10) relativ zu diesem und zu dem Rohr (15) bewegt wird, um den Peak in der empfangenen elektromagnetischen Strahlung zu detektieren.

**4.** Verfahren nach Anspruch 1 oder Anspruch 2,
**dadurch gekennzeichnet, daß**
die Empfangsantenne (10) an einem festen Ort angeordnet ist und die Sendeantenne (12) relativ zu diesem und zu dem Rohr bewegt wird, um den Peak in der empfangenen elektromagnetischen Strahlung zu detektieren.

**5.** Verfahren nach Anspruch 1 oder Anspruch 2,
**dadurch gekennzeichnet, daß**
sowohl die Antenne des Senders als auch die Antenne des Empfängers relativ zu dem Rohr bewegt wird, um den Peak in der elektromagnetischen Strahlung zu detektieren.

**6.** Verfahren nach einem der vorangehenden Ansprüche,
**dadurch gekennzeichnet, daß**
die Frequenz der elektromagnetischen Wellen in Abhängigkeit von der Zeit geändert wird.

**7.** Verfahren nach einem der vorangehenden Ansprüche,
**dadurch gekennzeichnet, daß**
ein von dem Empfänger beim Anschalten des Senders empfangenes Signal mit einem von dem Empfänger beim Ausschalten des Senders empfangenen Signal verglichen wird, wodurch das Unterscheiden des Empfangs elektromagnetischer Wellen, die von einem Leck an einer für elektromagnetische Wellen durchlässigen Leckstelle in dem Rohr verursacht werden, von dem Empfang elektromagnetischer Wellen anderer Quellen erleichtert werden soll.

**8.** Verfahren nach Anspruch 7,
**dadurch gekennzeichnet, daß**
der Sender mit einer Steuereinrichtung zum An-/Ausschalten des Sendebetriebs versehen ist und der Empfänger mit einem Fernsteuerschalter zur Fernbedienung der Steuereinrichtung zum An-/Auschalten des Senders versehen ist.

**9.** Verfahren nach Anspruch 7,
**dadurch gekennzeichnet, daß**
der Sender mit einer Steuereinrichtung zum An-/Ausschalten des Sendebetriebs und mit einer Einrichtung zum Senden eines Signal an den Empfänger versehen ist, welches angibt, ob sich der Sender in an- oder ausgeschaltetem Sendezustand befindet.

**10.** Verfahren nach einem der vorangehenden Ansprüche,
**dadurch gekennzeichnet, daß**
die von dem Sender ausgesendeten elektromagnetischen Wellen moduliert werden.

**11.** Verfahren nach Anspruch 10,
**dadurch gekennzeichnet, daß**
die Frequenz der von dem Sender ausgesendeten elektromagnetischen Wellen durch Wobbeln geändert wird.

**12.** Verfahren nach Anspruch 10,
**dadurch gekennzeichnet, daß**
die Frequenz der von dem Sender ausgesendeten elektromagnetischen Wellen stufenweise geändert wird.

**13.** Verfahren nach einem der Ansprüche 10 bis 12,
**dadurch gekennzeichnet, daß**
die elektromagnetischen Wellen mittels von Menschen erkennbarer Informationssignale moduliert werden.

**14.** Verfahren nach einem der Ansprüche 10 bis 13,
**dadurch gekennzeichnet, daß**
die von dem Empfänger empfangenen elektromagnetischen Wellen mit den von dem Sender ausgesendeten elektromagnetischen Wellen als modulierte Signale verglichen werden, um die Zeitdifferenz zu erhalten; und daß die Zeitdifferenz dazu verwendet wird, um die Ausbreitungsdauer der elektromagnetischen Wellen von der Aussendestelle in dem Rohr bis zu der Leckstelle zu ermitteln, wodurch die Ausbreitungsdistanz in dem Rohr (15) ermittelt wird.

15. Verfahren nach Anspruch 14,
**dadurch gekennzeichnet, daß**
die Zeitdifferenz unter Bezugnahme auf die Phasendifferenz zwischen den von dem Empfänger detektierten elektromagnetischen Wellen und den von dem Sender ausgesendeten elektromagnetischen Wellen in Form von modulierten Signalen gemessen wird.

16. Verfahren nach einem der Ansprüche 10 bis 15,
**dadurch gekennzeichnet, daß**
bei der Aussendung der elektromagnetischen Wellen durch den Sender und bei dem Empfang der elektromagnetischen Wellen durch den Empfänger Impulskompressionsmethoden angewendet werden.

17. Verfahren nach einem der vorangehenden Ansprüche,
**dadurch gekennzeichnet, daß**
es den Schritt des Einstellens der Intensität der von dem Sender ausgesendeten elektromagnetischen Wellen beinhaltet.

18. Verfahren nach Anspruch 17,
**dadurch gekennzeichnet, daß**
die Einstellung der Intensität in Abhängigkeit von dem Niveau der von dem Empfänger empfangenen elektromagnetischen Wellen bewirkt wird.

19. Verfahren nach einem der vorangehenden Ansprüche,
**dadurch gekennzeichnet, daß**
die für elektromagnetische Wellen durchlässigen Leckstellen in dem Rohrsystem Fugen zwischen benachbarten Rohren des Systems sind und das Niveau der von dem Empfänger empfangenen elektromagnetischen Wellen zum Abschätzen des Zustands jeder zu inspizierenden Fuge verwendet wird.

20. Verfahren nach einem der Ansprüche 1 bis 13 oder 16 bis 19,
**dadurch gekennzeichnet, daß**
die Frequenz der ausgesendeten elektromagnetischen Wellen geringer ist als die Grenzfrequenz, oberhalb welcher das Rohr als ein Wellenleiter wirkt, und daß sowohl die Sendeantenne als auch die Empfangsantenne relativ zu dem Rohr (15) bewegt wird, wobei eine innerhalb und eine außerhalb des Rohres bewegt wird, um Peaks in der empfangenen elektromagnetischen Strahlung zu detektieren, wobei die Position sowohl der Sendeantenne (12) als auch der Empfangsantenne (10) verwendet wird, um die Lage einer für elektromagnetische Wellen durchlässigen Leckstelle festzustellen, wenn der Peak detektiert wird.

21. Verfahren nach einem der Ansprüche 1 bis 13 oder 16 bis 19,
**dadurch gekennzeichnet, daß**
es den Schritt des Einführens einer länglichen Sende- oder Empfangsantenne (10, 12) mit mehreren Richtungsabschnitten, welche eine Richtcharakteristik senkrecht zu der Länge der Antenne aufweisen, in das zu inspizierende Rohr und des Bewegens einer Empfangs- oder Sendeantenne (10, 12) entlang der Außenseite des Rohrabschnitts, in welchem sich die längliche Antenne befindet, beinhaltet, während elektromagnetische Wellen von der Sendeantenne (12) zu der Empfangsantenne (10) gesendet werden und der Ort irgendeiner für elektromagnetische Wellen durchlässigen Leckstelle in dem Rohrabschnitt, in welchem sich die längliche Antenne befindet, durch Bezugnahme auf die Position der bewegten Antenne detektiert wird, wenn der Peak in den empfangenen elektromagnetischen Wellen detektiert wird.

22. Vorrichtung zum Inspizieren eines Rohres (15) mittels elektromagnetischer Strahlung, umfassend einen Sender zum Senden elektromagnetischer Wellen von einer Sendeantenne (12) und einen Empfänger zum Empfangen elektromagnetischer Wellen an einer Empfangsantenne (10), mittels welchen die Lage einer für elektromagnetische Wellen durchlässigen Leckstelle in dem Rohr (15) entlang des Rohres (15) ermittelt werden soll,
**dadurch gekennzeichnet, daß**
die Sendeantenne (12) innerhalb oder außerhalb des Rohres (15) angeordnet ist und die Empfangsantenne (10) außerhalb oder innerhalb des Rohres (15) angeordnet ist, daß eine Einrichtung vorgesehen ist, welche eine Bewegung der Sendeantenne (12) und/oder der Empfangsantenne (10) relativ zu dem Rohr (15) bewirkt, und daß eine Einrichtung zum Dekektieren eines Peaks in der von dem Empfänger empfangenen elektromagnetischen Strahlung vorgesehen ist, wobei das Vorhandensein des Peaks nicht von einer Änderung der Beabstandung der Sende- und Empfangsantenne (12, 10) abhängt, so daß die Lage der elektromagnetischen Leckstelle durch Bezugnahme auf die Position der bewegten Antenne oder Antennen identifiziert wird, wenn ein derartiger Peak detektiert wird.

23. Vorrichtung nach Anspruch 22,
    **dadurch gekennzeichnet, daß**
    in die Wandung des zu inspizierenden Rohres ein Loch gebohrt ist und in diesem ein Innengewinde ausgebildet ist, um ein Antenneninstallationsloch zu bilden; und daß eine koaxial ausgebildete Antenne mit einer aus ihrer Mitte hervorstehenden Sonde und mit einem um ein Außenteil ausgebildeten Außengewinde in dem Antenneninstallationsloch installiert ist, wobei das Innen- und das Außengewinde miteinander in Eingriff steht, um die Sonde zwecks Bildung einer Antenne in dem Rohr anzuordnen.

24. Vorrichtung nach Anspruch 22 oder Anspruch 23,
    **dadurch gekennzeichnet, daß**
    das zu inspizierende Rohr an einem Ende aufgeschnitten ist und eine koaxial ausgebildete Antenne mit einer koaxial hervorstehenden Sonde in der das Ende verschließenden Abdeckung installiert ist, wobei die Abdeckung zwecks Bildung einer Antenne an dem Ende installiert ist.

25. Vorrichtung nach den Ansprüchen 22, 23 oder 24,
    **dadurch gekennzeichnet, daß**
    eine Sonde in das Innere der Abdeckung hineinragt, welche die zentrale Verzweigungsöffnung eines Verzweigungsstücks verschließt, das an der Verlängerung des zu inspizierenden Rohres installiert ist; daß die Sonde und ein elektromagnetische Wellen erzeugender Oszillator mit einem Koaxialkabel verbunden sind; und daß die Sonde mit an der zentralen Verzweigungsöffnung installierter Abdeckung in dem Verzweigungsstück angeordnet ist, um eine Antenne zu bilden.

26. Vorrichtung nach Anspruch 25,
    **dadurch gekennzeichnet, daß**
    die Abdeckung über ein Gewinde mit der zentralen Verzweigungsöffnung des Verzweigungsstücks in Eingriff steht und ein Abschirmmaterial in der Form eines O-Rings zwischen der Abdeckung und der zentralen Verzweigungsöffnung des Verzweigungsstücks vorgesehen ist.

27. Vorrichtung nach Anspruch 25 oder Anspruch 26,
    **dadurch gekennzeichnet, daß**
    die Abdeckung über ein Gewinde mit der zentralen Verzweigungsöffnung des Verzweigungsstücks in Eingriff steht und ein Abschirmmaterial in dem Gewindeeingriffsbereich vorgesehen ist.

28. Vorrichtung nach einem der Ansprüche 22 bis 27,
    **dadurch gekennzeichnet, daß**
    eine der Antennen eine längliche Mehrfachabschnittsantenne ist, deren Abschnitte eine Richtcharakteristik senkrecht zu der Länge der Antenne aufweisen, und daß eine Einrichtung zum Einführen der länglichen Antenne in einen Abschnitt des zu inspizierenden Rohres vorgesehen ist.

29. Vorrichtung nach Anspruch 28,
    **dadurch gekennzeichnet, daß**
    die längliche Antenne eine längliche Wendelantenne, deren Bündelung senkrecht zu der Achse eingestellt ist, oder ein Koaxialschlitzkabel oder ein Schlitzkabel aus einer verdrillten Doppelleitung ist.

**Revendications**

1. Procédé destiné à inspecter un tuyau (15) en utilisant un rayonnement électromagnétique comprenant les étapes consistant à émettre des ondes électromagnétiques depuis l'antenne (12) d'un émetteur, recevoir des ondes électromagnétiques avec l'antenne (10) d'un récepteur afin de déterminer la position le long du tuyau d'un point de fuite électromagnétique tel qu'un joint ou un défaut dans le tuyau (15), **caractérisé en ce qu'**il comprend les étapes supplémentaires consistant à placer l'antenne d'émission (12) à l'intérieur ou à l'extérieur du tuyau (15) et à placer l'antenne de réception (10) respectivement à l'extérieur ou à l'intérieur du tuyau (15), à réaliser le déplacement d'au moins l'une des antennes de réception et d'émission (10, 12) par rapport au tuyau, détecter dans le rayonnement électromagnétique reçu un pic, dont la présence n'est pas due à une variation de la séparation de l'antenne d'émission et de réception et identifier la position du point de fuite électromagnétique par référence à la position de l'antenne ou des antennes mobiles lorsqu'un tel pic est détecté.

**2.** Procédé selon la revendication 1, **caractérisé en ce que** les ondes électromagnétiques sont émises à une fréquence telle qu'elles se propagent à l'intérieur du tuyau (15).

**3.** Procédé selon la revendication 1 ou la revendication 2, **caractérisé en ce que** l'antenne d'émission (12) est située à un emplacement fixe et que l'antenne de réception (10) est déplacée par rapport à celle-ci et au tuyau (15) afin de détecter ledit pic du rayonnement électromagnétique reçu.

**4.** Procédé selon la revendication 1 ou la revendication 2, **caractérisé en ce que** l'antenne de réception (10) est située à un emplacement fixe et l'antenne d'émission (12) est déplacée par rapport à celle-ci et au tuyau afin de détecter ledit pic du rayonnement électromagnétique reçu.

**5.** Procédé selon la revendication 1 ou la revendication 2, **caractérisé en ce que** les antennes à la fois de l'émetteur et du récepteur sont déplacées par rapport au tuyau pour détecter ledit pic du rayonnement électromagnétique reçu.

**6.** Procédé selon l'une quelconque des revendications précédentes, **caractérisé en ce que** la fréquence des ondes électromagnétiques est amenée à varier dans le temps.

**7.** Procédé selon l'une quelconque des revendications précédentes, **caractérisé en ce qu'**un signal reçu par le récepteur lorsque l'émetteur est activé est comparé à un signal reçu par le récepteur lorsque l'émetteur est désactivé, afin de faciliter ainsi la distinction de la réception des ondes électromagnétiques provoquée par une fuite en un point de fuite des ondes électromagnétiques dans le tuyau, de la réception des ondes électromagnétiques provenant d'autres sources.

**8.** Procédé selon la revendication 7, **caractérisé en ce que** l'émetteur est muni d'un moyen de commande d'activation/désactivation d'émission et le récepteur est muni d'un commutateur de commande à distance destiné à actionner à distance les moyens de commande d'activation/désactivation des émetteurs.

**9.** Procédé selon la revendication 7, **caractérisé en ce que** l'émetteur est muni d'un moyen de commande d'activation/désactivation d'émission et d'un moyen destiné à émettre vers le récepteur un signal représentant l'état d'émission actif/inactif de l'émetteur.

**10.** Procédé selon l'une quelconque des revendications précédentes, **caractérisé en ce que** les ondes électromagnétiques émises par l'émetteur sont modulées.

**11.** Procédé selon la revendication 10, **caractérisé en ce que** la fréquence des ondes électromagnétiques émises par l'émetteur est amenée à varier par un balayage.

**12.** Procédé selon la revendication 10, **caractérisé en ce que** la fréquence des ondes électromagnétiques émises par l'émetteur est amenée à varier par pas.

**13.** Procédé selon l'une quelconque des revendications 10 à 12, **caractérisé en ce que** les ondes électromagnétiques sont modulées par des signaux d'informations pouvant être reconnus par un être humain.

**14.** Procédé selon l'une quelconque des revendications 10 à 13, **caractérisé en ce que** les ondes électromagnétiques reçues par le récepteur sont comparées aux ondes électromagnétiques émises par l'émetteur sous forme de signaux modulés, afin d'obtenir la différence de temps, et la différence de temps est utilisée pour déterminer le temps de propagation des ondes électromagnétiques depuis le point d'émission dans le tuyau vers le point de fuite afin de déterminer ainsi la distance de propagation dans le tuyau (15).

**15.** Procédé selon la revendication 14, **caractérisé en ce que** la différence de temps est mesurée par référence à la différence de phase entre les ondes électromagnétiques détectées par le récepteur et les ondes électromagnétiques émises par l'émetteur en termes de signaux modulés.

**16.** Procédé selon l'une quelconque des revendications 10 à 15, **caractérisé en ce que** des techniques de compression d'impulsion sont employées dans l'émission des ondes électromagnétiques par l'émetteur et dans la réception des ondes électromagnétiques par le récepteur.

**17.** Procédé selon l'une quelconque des revendications précédentes, **caractérisé en ce qu'**il comprend l'étape consistant à ajuster l'intensité des ondes électromagnétiques émises par l'émetteur.

**18.** Procédé selon la revendication 17, **caractérisé en ce que** l'ajustement de l'intensité est réalisé en réponse au niveau des ondes électromagnétiques reçues par le récepteur.

**19.** Procédé selon l'une quelconque des revendications précédentes, en ce que les points de fuite des ondes électromagnétiques dans le système de tuyauterie sont des joints entre des tuyaux adjacents du système et le niveau des ondes électromagnétiques reçues par le récepteur sert de référence pour estimer l'état de chaque joint à inspecter.

**20.** Procédé selon l'une quelconque des revendications 1 à 13 ou 16 à 19, **caractérisé en ce que** la fréquence des ondes électromagnétiques émises est inférieure à la fréquence de coupure au-dessus de laquelle le tuyau agit en tant que guide d'ondes, et à la fois l'antenne de l'émetteur et l'antenne du récepteur sont déplacées par rapport au tuyau (15), l'une à l'intérieur et l'autre à l'extérieur du tuyau, afin de détecter des pics du rayonnement électromagnétique reçu, la position à la fois de l'antenne d'émission (12) et de l'antenne de réception (10) étant utilisée pour déterminer l'emplacement d'un point de fuite d'ondes électromagnétiques lorsque ledit pic est détecté.

**21.** Procédé selon l'une quelconque des revendications 1 à 13 ou 16 à 19, **caractérisé en ce qu'**il comprend l'étape consistant à introduire dans le tuyau à inspecter une antenne d'émission ou de réception allongée (10, 12) comportant une pluralité de parties directionnelles qui sont directionnelles perpendiculairement à la longueur de l'antenne, et à déplacer une antenne de réception ou d'émission (10, 12) respectivement, le long de l'extérieur de la section du tuyau logeant ladite antenne allongée tout en émettant des ondes électromagnétiques depuis l'antenne d'émission (10) vers l'antenne de réception (10) et à détecter l'emplacement d'un point de fuite d'ondes électromagnétiques quelconque dans la section du tuyau logeant l'antenne allongée par référence à la position de l'antenne mobile lorsque ledit pic des ondes électromagnétiques reçues est détecté.

**22.** Dispositif destiné à inspecter un tuyau (15) en utilisant un rayonnement électromagnétique, comprenant un émetteur destiné à émettre des ondes électromagnétiques depuis l'antenne d'émission (12), un récepteur destiné à recevoir des ondes électromagnétiques à une antenne de réception (10), afin de déterminer la position le long du tuyau (15) d'un point de fuite d'ondes électromagnétiques dans le tuyau (15), **caractérisé en ce que** l'antenne d'émission (12) est située à l'intérieur ou à l'extérieur du tuyau (15) et que l'antenne de réception (10) est située respectivement à l'extérieur ou à l'intérieur du tuyau (15), et un moyen est prévu pour réaliser un déplacement de l'antenne d'émission (12) et/ou de l'antenne de réception (10) par rapport au tuyau (15) et un moyen destiné à détecter dans le rayonnement électromagnétique reçu au récepteur un pic dont la présence n'est pas due à une variation de la séparation de l'antenne d'émission et de réception (12, 10) de sorte que la position dudit point de fuite électromagnétique soit identifiée par référence à la position de l'antenne ou des antennes mobiles lorsqu'un tel pic est détecté.

**23.** Dispositif selon la revendication 22, **caractérisé en ce que** la paroi du tuyau à inspecter est percée de façon à présenter un alésage, et des filets internes sont formés dans celui-ci pour réaliser un alésage d'installation d'antenne, et une antenne fabriquée de façon coaxiale à une sonde dépassant au centre et comportant des filets externes formés autour d'un élément extérieur est installée dans l'alésage d'installation d'antenne, les filets internes et externes étant en prise les uns aux autres, afin de placer la sonde dans le tuyau, en vue de constituer une antenne.

**24.** Dispositif selon la revendication 22 ou la revendication 23, **caractérisé en ce que** le tuyau à inspecter est coupé à une extrémité, et qu'une antenne fabriquée de façon coaxiale à une sonde dépassant de façon coaxiale est installée dans le couvercle refermant l'extrémité, le couvercle étant installé à l'extrémité en vue de constituer une antenne.

**25.** Dispositif selon les revendications 22, 23 ou 24, **caractérisé en ce qu'**une sonde dépasse à l'intérieur du couvercle en refermant l'ouverture de la branche centrale d'un té installé sur le prolongement du tuyau à inspecter, la sonde et l'oscillateur d'ondes électromagnétiques sont reliés par un câble coaxial, et la sonde est située dans le té, le couvercle étant installé au niveau de l'ouverture de la branche centrale afin de constituer une antenne.

**26.** Dispositif selon la revendication 25, **caractérisé en ce que** le couvercle est en prise par vissage avec l'ouverture de la branche centrale du té, et un joint torique de ligne formé d'un matériau de blindage est prévu entre le couvercle et l'ouverture de la branche centrale du té.

**27.** Dispositif selon la revendication 25 ou la revendication 26, **caractérisé en ce que** le couvercle est mis en prise par vissage avec l'ouverture de la branche centrale du té, et un matériau de blindage est prévu dans la partie en prise par vissage.

**28.** Dispositif selon les revendications 22 à 27, **caractérisé en ce que** l'une des antennes est une antenne à parties multiples allongée dont les parties sont directionnelles dans une direction perpendiculaire à la longueur de l'antenne, ainsi que par un moyen destiné à introduire l'antenne allongée dans une section du tuyau à inspecter.

**29.** Dispositif selon la revendication 28, **caractérisé en ce que** l'antenne allongée est une antenne hélicoïdale allongée dont la direction est ajustée dans des directions perpendiculaires à l'axe, ou bien un câble coaxial de fuite ou bien un câble de fuite à paire torsadée.

Figure 1

Figure 2

Figure 3

buried pipe 100A  φ 30mm
axial direction of the pipe

distance along the axial direction of the pipe [cm]
2[GHz]

Figure 4

buried pipe 100A  φ 30mm
direction perpendicular to the axis of the pipe

distance along the direction perpendicular to the axis of the pipe [cm]
2 [GHz]

Figure 5

Figure 6

Figure 7

Figure 8

Figure 9

Figure 10

Figure 11

Figure 12

Figure 13

Figure 14

frequency f [GHz]

Figure 15

Figure 16

low        high   low        high

⟶ 時間

Figure 17

low        high        low

⟶ time

Figure 18

⟶ time

Figure 19

Figure 20

Figure 21

(a)

(b)

Figure 22

EP 0 745 841 B1

Figure 23

Figure 24